(19) Europäisches Patentamt
European Patent Office
Office européen des brevets

(11) **EP 4 129 787 B1**

(12) **EUROPEAN PATENT SPECIFICATION**

(45) Date of publication and mention
of the grant of the patent:
**14.05.2025  Bulletin 2025/20**

(21) Application number: **20928310.0**

(22) Date of filing: **31.03.2020**

(51) International Patent Classification (IPC):
**B60W 30/08** (2012.01)    **G05D 1/00** (2024.01)
**B60W 30/16** (2020.01)    **B60K 31/00** (2006.01)

(52) Cooperative Patent Classification (CPC):
**B60W 30/16;** B60K 2031/0016; B60W 2552/53;
B60W 2554/802; B60W 2556/45

(86) International application number:
**PCT/CN2020/082612**

(87) International publication number:
**WO 2021/196041 (07.10.2021 Gazette 2021/40)**

(54) **SELECTION METHOD FOR KEY TARGET, APPARATUS, AND SYSTEM**

AUSWAHLVERFAHREN FÜR EIN SCHLÜSSELZIEL, VORRICHTUNG UND SYSTEM

PROCÉDÉ DE SÉLECTION POUR CIBLE CLÉ, APPAREIL ET SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2023  Bulletin 2023/06**

(73) Proprietor: **Shenzhen Yinwang Intelligent
Technologies Co., Ltd.
Shenzhen City, Guangdong 518129 (CN)**

(72) Inventors:
• **WANG, Bingxue
Shenzhen, Guangdong 518129 (CN)**
• **ZHAO, Zihui
Shenzhen, Guangdong 518129 (CN)**

(74) Representative: **Gill Jennings & Every LLP
The Broadgate Tower
20 Primrose Street
London EC2A 2ES (GB)**

(56) References cited:
CN-A- 110 487 288      CN-A- 110 667 578
CN-A- 110 696 828      CN-A- 110 909 711
DE-A1- 102011 102 429  DE-A1- 102016 113 804
KR-A- 20170 078 323    KR-B1- 102 061 140
US-A- 5 999 874

**EP 4 129 787 B1**

## Description

## TECHNICAL FIELD

The invention relates to the field of autonomous driving technologies, and in particular, to a key object selection technology in autonomous driving.

## BACKGROUND

In an autonomous driving technology, a vehicle-mounted radar and/or a camera are/is usually used to implement target detection and lane line detection. Generally, an object refers to various elements on a road, for example, a vehicle, a pedestrian, and an animal. Correct selection of a key object is a critical prerequisite for realizing autonomous driving. The key object is an object that may subsequently affect driving of the vehicle within a time period and/or a space range. Determining the key object can provide support for an autonomous driving system and/or a driver assistance system to perform a correct control action on the vehicle. This can effectively improve driving safety of the vehicle.

In the conventional technology, in a complex road scenario, a dense traffic flow scenario, and different driving intentions, an autonomous driving system and/or a driver assistance system cannot accurately select a key object from a plurality of objects. Consequently, the autonomous driving system and/or the driver assistance system cannot perform a correct control action on the vehicle.

Therefore, there is a need for a solution in which a key object can be accurately selected in a complex scenario.

US 5 999 874 discloses a method for controlling the velocity of a vehicle under consideration of preceding vehicles and to an apparatus for implementing the method. DE 10 2011 102429 discloses a method for operating a longitudinal driving assistance system of a motor vehicle, and a motor vehicle.

## SUMMARY

The invention provides a key object selection method, an apparatus, and a system, to accurately select a key object in a complex scenario. The invention is defined by the appended claims. Embodiments not falling within the scope of the claims are exemplary.

According to a first aspect, the invention provides a key object selection method. The method includes:

obtaining lane line detection information, motion posture information of a first vehicle, and detection information of a plurality of objects; determining a lane area based on the lane line detection information; determining a track area of the first vehicle based on the motion posture information of the first vehicle; determining a passing area of the first vehicle based on the lane area, the track area of the first vehicle, and a traveling status of the first vehicle; determining status parameter values of the plurality of objects based on the passing area of the first vehicle and the detection information of the plurality of objects, where the status parameter value of each object is used to indicate a degree of overlapping between the object and the passing area of the first vehicle; and selecting at least one key object from the plurality of objects based on at least the status parameter values of the plurality of objects.

According to the foregoing method, the passing area of the first vehicle is determined by using the obtained lane line detection information and the obtained motion posture information of the first vehicle, the status parameter values of the plurality of objects are determined with reference to the obtained detection information of the plurality of objects, and the at least one key object is further selected from the plurality of objects based on the status parameter values of the plurality of objects. In the foregoing method, various scenarios in which the first vehicle is located are comprehensively considered, and a degree of overlapping between different objects and the passing area of the first vehicle is considered. Therefore, the key object can be accurately selected in various scenarios, to provide support for an autonomous driving system and a driver assistance system to perform a correct control action on the first vehicle.

In a possible design, the lane area includes an area of a lane in which the first vehicle is located and an area other than the lane in which the first vehicle is located. The area other than the lane in which the first vehicle is located includes at least one of an area of a lane on the left of the lane in which the first vehicle is located or an area of a lane on the right of the lane in which the first vehicle is located.

In a possible design, the method further includes: re-determining the lane area when at least one of a plurality of the following events is determined based on the lane line detection information. The plurality of events include: a distance between a left lane line and a right lane line does not meet a first preset condition, a distance between the left lane line and the first vehicle does not meet a second preset condition, and a distance between the right lane line and the first vehicle does not meet the second preset condition.

According to the foregoing design, the lane line detection information can be corrected, to obtain a correct lane area.

In a possible design, the traveling status of the first vehicle includes one or more of the following: the first vehicle travels in an area without a lane line, the first vehicle travels in the lane in which the first vehicle is located, the first vehicle travels on the lane line, the first vehicle performs lane change but does not cross the lane line, and the first vehicle performs lane change and crosses the lane line.

According to the foregoing design, a plurality of possible scenarios in which the first vehicle travels are considered, to provide a reference background for implementing key object selection in various scenarios.

In a possible design, the method further includes: when the first vehicle remains in a first status or a second status for more than first preset duration, determining that the first vehicle has the traveling status in which the first vehicle travels on the lane line. In the first status, an included angle between a head center line of the first vehicle and a left lane line is less than a first preset threshold, and a vertical distance from a head center point of the first vehicle to the left lane line is less than a second preset threshold. In the second status, an included angle between the head center line of the first vehicle and a right lane line is less than the first preset threshold, and a vertical distance from the head center point of the first vehicle to the right lane line is less than the second preset threshold.

According to the foregoing design, it can be accurately and easily determined whether the first vehicle has a status in which the first vehicle travels on the lane line.

In a possible design, the method further includes: when the first vehicle remains in a third status or a fourth status for more than second preset duration, determining that the first vehicle has the traveling status in which the first vehicle performs lane change but does not cross the lane line. In the third status, an included angle between a head center line of the first vehicle and a left lane line is greater than a third preset threshold, a vertical distance from a head center point of the first vehicle to the left lane line decreases and is greater than 0, and a vertical distance from the head center point of the first vehicle to a right lane line increases and is less than a preset lane width. In the fourth status, an included angle between the head center line of the first vehicle and the right lane line is greater than the third preset threshold, a vertical distance from the head center point of the first vehicle to the right lane line decreases and is greater than 0, and a vertical distance from the head center point of the first vehicle to the left lane line increases and is less than the preset lane width.

According to the foregoing design, it can be accurately and easily determined whether the first vehicle has a status in which the first vehicle performs lane change but does not cross the lane line.

In a possible design, the method further includes: in a lane line detection periodicity, when a vertical distance from a head center point of the first vehicle to a left lane line suddenly changes from a preset lane width to 0, and a vertical distance from the head center point of the first vehicle to a right lane line suddenly changes from 0 to the preset lane width, determining that the first vehicle has the traveling status in which the first vehicle performs lane change and crosses the lane line; or in a lane line detection periodicity, when a vertical distance from a head center point of the first vehicle to a left lane line suddenly changes from 0 to a preset lane width, and a vertical distance from the head center point of the first vehicle to a right lane line suddenly changes from the preset lane width to 0, determining that the first vehicle has the traveling status in which the first vehicle performs lane change and crosses the lane line.

According to the foregoing design, it can be accurately and easily determined whether the first vehicle has a status in which the first vehicle performs lane change and crosses the lane line.

In a possible design, a moving track of the first vehicle is determined based on the motion posture information of the first vehicle, an original track area is determined based on the moving track of the first vehicle and a preset extension width, and a longitudinal maximum distance and a longitudinal cut-in distance are determined based on the motion posture information of the first vehicle. The longitudinal maximum distance indicates a range in which traveling of the first vehicle may be affected at a current moment and at a current speed of the first vehicle, and the longitudinal cut-in distance indicates a possible location at which another object vertically cuts in the lane in which the first vehicle is located. The track area of the first vehicle is determined based on the original track area, the longitudinal maximum distance, the longitudinal cut-in distance, and an extension width corresponding to the longitudinal cut-in distance, where the extension width corresponding to the longitudinal cut-in distance is greater than the preset extension width. Alternatively, the track area of the first vehicle is determined based on the original track area, the longitudinal maximum distance, and an extension width corresponding to the longitudinal maximum distance, where the extension width corresponding to the longitudinal maximum distance is less than the preset extension width.

In the track area of the first vehicle obtained by using the foregoing design, a location at which another object may cut in the lane in which the first vehicle is located and a longitudinal distance range that is greatly affected by the object are relatively comprehensively considered, which helps select a key object while considering safety of the first vehicle.

In a possible design, when the first vehicle has the traveling status in which the first vehicle travels in the area without the lane line, it is determined that the passing area of the first vehicle is the track area of the first vehicle. Alternatively, when the first vehicle has the traveling status in which the first vehicle travels in the lane in which the first vehicle is located, it is determined that the passing area of the first vehicle is the area of the lane in which the first lane is located, where a length of the passing area of the first vehicle is determined based on the longitudinal maximum distance. Alternatively, when the first vehicle has the traveling status in which the first vehicle travels on the lane line, it is determined that the passing area of the first vehicle is determined based on the area of the lane in which the first vehicle is located and the track area of the first vehicle, where a length of the passing area of the first vehicle is determined based on the longitudinal maximum distance. Alternatively, when the first vehicle has the traveling status in which the first vehicle performs lane change but does not cross the lane line, it is determined that the passing area of the first vehicle is an area of a target lane obtained after lane change of the first vehicle, where a length of the passing area of the first vehicle is determined based on the longitudinal maximum distance. Alternatively, when the first vehicle has the traveling status in which the first vehicle performs lane change and crosses the lane line, it is determined that the passing area of the first vehicle is the area of the lane in which the first vehicle is located, where a length of the passing area of the first vehicle is determined based on the longitudinal maximum distance.

According to the foregoing design, the passing area of the first vehicle can be determined based on different traveling status of the first vehicle, and effectiveness of the passing area of the first vehicle can be ensured.

In a possible design, when it is determined, based on detection information of one object in the detection information of the plurality of objects, that the object is located on the left of the first vehicle, a vertical distance between a center point of the object and a left boundary of the passing area of the first vehicle is determined based on the passing area of the first vehicle and the detection information of the object, and the status parameter value of the object is determined based on the vertical distance between the center point of the object and the left boundary of the passing area of the first vehicle, a distance between the center point of the object and the head center line of the first vehicle, and a width of the object. Alternatively, when it is determined, based on detection information of one object in the detection information of the plurality of objects, that the object is located on the right of the first vehicle, a vertical distance between a center point of the object and a right boundary of the passing area of the first vehicle is determined based on the passing area of the first vehicle and the detection information of the object, and the status parameter value of the object is determined based on the vertical distance between the center point of the object and the right boundary of the passing area of the first vehicle, a distance between the center point of the object and the head center line of the first vehicle, and a width of the object. Alternatively, when it is determined, based on detection information of one object in the detection information of the plurality of objects, that a center point of the object falls on a head center line of the first vehicle, a vertical distance between the center point of the object and a right boundary of the passing area of the first vehicle is determined based on the passing area of the first vehicle and the detection information of the object, and the status parameter value of the object is determined based on the vertical distance between the center point of the object and the right boundary of the passing area of the first vehicle, and a width of the object.

According to the foregoing design, the status parameter value of the object can be determined.

In a possible design, the method further includes: monitoring a change trend of the status parameter value of the object; and when it is determined that the change trend of the status parameter value of the object meets a preset condition, determining a motion status of the object and a lane in which the object is located.

According to the foregoing design, the motion status of the object and a change status of the lane in which the object is located can be further determined by using the change trend of the status parameter value of the monitored object.

In a possible design, the method further includes: When the object is located in the lane in which the first vehicle is located, a head of the object faces leftward, and a condition A is met, it is determined that the object cuts out of the lane in which the first vehicle is located to the lane on the left of the lane in which the first vehicle is located. Alternatively, when the object is located in the lane in which the first vehicle is located, a head of the object faces rightward, and a condition A is met, it is determined that the object cuts out of the lane in which the first vehicle is located to the lane on the right of the lane in which the first vehicle is located. Alternatively, when the object is located in a lane on the left of the lane in which the first vehicle is located, a head of the object faces rightward, and a condition B is met, it is determined that the object cuts in the lane in which the first vehicle is located from the lane on the left of the lane in which the first vehicle is located. Alternatively, when the object is located in a lane on the right of the lane in which the first vehicle is located, a head of the object faces leftward, and a condition B is met, it is determined that the object cuts in the lane in which the first vehicle is located from the lane on the right of the lane in which the first vehicle is located. The condition A includes: the status parameter value of the object gradually decreases and exceeds third preset duration, and an accumulated decrement of the status parameter value of the object exceeds a fourth preset threshold. The condition B includes: the status parameter value of the object gradually increases and exceeds fourth preset duration, and an accumulated increment of the status parameter value of the object exceeds a fifth preset threshold.

According to the foregoing design, the motion status of the object can be determined based on the status parameter value of the object.

In a possible design, the method further includes: When the object is cut from the lane in which the first vehicle is located to the lane on the left of the lane in which the first vehicle is located, and a condition C is met, it is determined that the object is located in the lane on the left of the lane in which the first vehicle is located. Alternatively, when the object is cut from the lane in which the first vehicle is located to the lane on the left of the lane in which the first vehicle is located, and a condition C is met, it is determined that the object is located in the lane on the right of the lane in which the first vehicle is located. Alternatively, when the object cuts in the lane in which the first vehicle is located from the lane on the left of the lane in which the first vehicle is located, and a condition D is met, it is determined that the object is located in the lane in which the first vehicle is located. Alternatively, when the object cuts in the lane in which the first vehicle is located from the lane on the right of the lane in which the first vehicle is located, and a condition D is met, it is determined that the object is located in the lane in which the first vehicle is located. The condition C includes: the status parameter value of the object gradually decreases and exceeds fifth preset duration, and the accumulated decrement of the status parameter value of the object is less than a sixth preset threshold. The condition D includes: the status parameter value of the object gradually increases and exceeds sixth preset duration, and the accumulated increment of the status parameter value corresponding to the object is greater than a seventh preset threshold.

According to the foregoing design, the lane in which the object is located can be further determined based on the status parameter value of the object and with reference to the motion status of the object.

In a possible design, at least one key object is determined from the plurality of objects based on at least the status parameter values of the plurality of objects and a longitudinal distance between each of the plurality of objects and the first vehicle.

According to the foregoing design, the key object can be easily and accurately selected.

In a possible design, target parameter values respectively corresponding to the plurality of objects are calculated. A target parameter value corresponding to each object is determined based on a first function value and a second function value. The first function value is determined based on the longitudinal distance between the object and the first vehicle and the longitudinal maximum distance, and the second function value is determined based on the status parameter value of the object. The at least one key object is determined from the plurality of objects based on the target parameter values respectively corresponding to the plurality of objects.

According to the foregoing design, the key object can be easily and accurately selected.

In a possible design, the at least one key object is selected from the plurality of objects based on the status parameter values of the plurality of objects, a longitudinal distance between each of the plurality of objects and the first vehicle, a motion status of at least one object in the plurality of objects, and a lane in which the at least one object is located.

According to the foregoing design, the key object can be easily and accurately selected with reference to the motion status of the object and the lane in which the object is located.

In a possible design, the method further includes: displaying information about the at least one key object on a human machine interface of the first vehicle; or prompting a driver with the information about the at least one key object by using a voice.

According to the foregoing design, the driver can be notified of the information about the key object.

According to a second aspect, the invention provides a key object selection apparatus. The apparatus includes: an obtaining unit, configured to obtain lane line detection information, motion posture information of a first vehicle, and detection information of a plurality of objects; a processing unit, configured to: determine a lane area based on the lane line detection information; determine a track area of the first vehicle based on the motion posture information of the first vehicle; determine a passing area of the first vehicle based on the lane area, the track area of the first vehicle, and a traveling status of the first vehicle; determine status parameter values of the plurality of objects based on the passing area of the first vehicle and the detection information of the plurality of objects, where the status parameter value of each object is used to indicate a degree of overlapping between the object and the passing area of the first vehicle; and select at least one key object from the plurality of objects based on at least the status parameter values of the plurality of objects.

In a possible design, the lane area includes an area of a lane in which the first vehicle is located and an area other than the lane in which the first vehicle is located. The area other than the lane in which the first vehicle is located includes at least one of an area of a lane on the left of the lane in which the first vehicle is located or an area of a lane on the right of the lane in which the first vehicle is located.

In a possible design, the processing unit is configured to re-determine the lane area when at least one of a plurality of the following events is determined based on the lane line detection information. The plurality of events include: a distance between a left lane line and a right lane line does not meet a first preset condition, a distance between the left lane line and the first vehicle does not meet a second preset condition, and a distance between the right lane line and the first vehicle does not meet the second preset condition.

In a possible design, the traveling status of the first vehicle includes one or more of the following: the first vehicle travels in an area without a lane line, the first vehicle travels in the lane in which the first vehicle is located, the first vehicle travels on the lane line, the first vehicle performs lane change but does not cross the lane line, and the first vehicle performs lane change and crosses the lane line.

In a possible design, the processing unit is configured to: when the first vehicle remains in a first status or a second status for more than first preset duration, determine that the first vehicle has the traveling status in which the first vehicle travels on the lane line. In the first status, an included angle between a head center line of the first vehicle and a left lane line is less than a first preset threshold, and a vertical distance from a head center point of the first vehicle to the left lane line is less than a second preset threshold. In the second status, an included angle between the head center line of the first vehicle and a right lane line is less than the first preset threshold, and a vertical distance from the head center point of the first vehicle to the right lane line is less than the second preset threshold.

In a possible design, the processing unit is configured to: when the first vehicle remains in a third status or a fourth status for more than second preset duration, determine that the first vehicle has the traveling status in which the first vehicle performs lane change but does not cross the lane line. In the third status, an included angle between a head center line of the first vehicle and a left lane line is greater than a third preset threshold, a vertical distance from a head center point of the first vehicle to the left lane line decreases and is greater than 0, and a vertical distance from the head center point of the first vehicle to a right lane line increases and is less than a preset lane width. In the fourth status, an included angle between the head center line of the first vehicle and the right lane line is greater than the third preset threshold, a vertical distance from the head center point of the first vehicle to the right lane line decreases and is greater than 0, and a vertical distance from the head center point of the first vehicle to the left lane line increases and is less than the preset lane width.

In a possible design, the processing unit is configured to: in a lane line detection periodicity, when a vertical distance from a head center point of the first vehicle to a left lane line suddenly changes from a preset lane width to 0, and a vertical distance from the head center point of the first vehicle to a right lane line suddenly changes from 0 to the preset lane width, determine that the first vehicle has the traveling status in which the first vehicle performs lane change and crosses the lane line; or in a lane line detection periodicity, when a vertical distance from a head center point of the first vehicle to a left lane line suddenly changes from 0 to a preset lane width, and a vertical distance from the head center point of the first vehicle to a right lane line suddenly changes from the preset lane width to 0, determine that the first vehicle has the traveling status in which the first vehicle performs lane change and crosses the lane line.

In a possible design, the processing unit is configured to: determine a moving track of the first vehicle based on the motion posture information of the first vehicle, and determine an original track area based on the moving track of the first vehicle and a preset extension width; determine a longitudinal maximum distance and a longitudinal cut-in distance based on the motion posture information of the first vehicle, where the longitudinal maximum distance indicates a range in which traveling of the first vehicle may be affected at a current moment and at a current speed of the first vehicle, and the longitudinal cut-in distance indicates a possible location at which another object vertically cuts in the lane in which the first vehicle is located; and determine the track area of the first vehicle based on the original track area, the longitudinal maximum distance, the longitudinal cut-in distance, and an extension width corresponding to the longitudinal cut-in distance, where the extension width corresponding to the longitudinal cut-in distance is greater than the preset extension width, or determine the track area of the first vehicle based on the original track area, the longitudinal maximum distance, and an extension width corresponding to the longitudinal maximum distance, where the extension width corresponding to the longitudinal maximum distance is less than the preset extension width.

In a possible design, the processing unit is configured to: when the first vehicle has the traveling status in which the first vehicle travels in an area without a lane line, determine that the passing area of the first vehicle is the track area of the first vehicle, and a longitudinal length of the passing area of the first vehicle is determined based on the longitudinal maximum distance; when the first vehicle has the traveling status in which the first vehicle travels in the lane in which the first vehicle is located, determine that the passing area of the first vehicle is an area of the lane in which the first lane is located, and a longitudinal length of the passing area of the first vehicle is determined based on the longitudinal maximum distance; when the first vehicle has the traveling status in which the first vehicle travels on a lane line, determine that the passing area of the first vehicle is determined based on an area of the lane in which the first vehicle is located and the track area of the first vehicle, and a longitudinal length of the passing area of the first vehicle is determined based on the longitudinal maximum distance; when the first vehicle has the traveling status in which the first vehicle performs lane change but does not cross a lane line, determine that the passing area of the first vehicle is an area of a target lane obtained after lane change of the first vehicle, and a longitudinal length of the passing area of the first vehicle is determined based on the longitudinal maximum distance; or when the first vehicle has the traveling status in which the first vehicle performs lane change and crosses a lane line, determine that the passing area of the first vehicle is an area of a lane in which the first vehicle is located, where a longitudinal length of the passing area of the first vehicle is determined based on the longitudinal maximum distance.

In a possible design, the processing unit is configured to: when it is determined, based on detection information of one object in the detection information of the plurality of objects, that the object is located on the left of the first vehicle, determine a vertical distance between a center point of the object and a left boundary of the passing area of the first vehicle based on the passing area of the first vehicle and the detection information of the object, and determine the status parameter value of the object based on the vertical distance between the center point of the object and the left boundary of the passing area of the first vehicle, a distance between the center point of the object and a head center line of the first vehicle, and a width of the object; when it is determined, based on detection information of one object in the detection information of the plurality of objects, that the object is located on the right of the first vehicle, determine a vertical distance between a center point of the object and a right boundary of the passing area of the first vehicle based on the passing area of the first vehicle and the detection information of the object, and determine the status parameter value of the object based on the vertical distance between the center point of the object and the right boundary of the passing area of the first vehicle, a distance between the center point of the object and a head center line of the first vehicle, and a width of the object; or when it is determined, based on detection information of one object in the detection information of the plurality of objects, that a center point of the object falls on a head center line of the first vehicle, determine a vertical distance between the center point of the object and a right boundary of the passing area of the first vehicle based on the passing area of the first vehicle and the detection information of the object, and determine the status parameter value of the object based on the vertical distance between the center point of the object and the right boundary of the passing area of the first vehicle, and a width of the object.

In a possible design, the processing unit is configured to: monitor a change trend of the status parameter value of the object; and when it is determined that the change trend of the status parameter value of the object meets a preset condition, determine a motion status of the object and a lane in which the object is located.

In a possible design, the processing unit is configured to: when the object is located in the lane in which the first vehicle is located, a head of the object faces leftward, and a condition A is met, determine that the object has the motion status in which the object cuts out of the lane in which the first vehicle is located to a lane on the left of the lane in which the first vehicle is located; when the object is located in the lane in which the first vehicle is located, a head of the object faces rightward, and a condition A is met, determine that the object has the motion status in which the object cuts out of the lane in which the first vehicle is located to a lane on the right of the lane in which the first vehicle is located; when the object is located in a lane on the left of the lane in which the first vehicle is located, a head of the object faces rightward, and a condition B is met, determine that the object has the motion status in which the object cuts in the lane in which the first vehicle is located from the lane on the left of the lane in which the first vehicle is located; or when the object is located in a lane on the right of the lane in which the first vehicle is located, a head of the object faces leftward, and a condition B is met, determine that the object has the motion status in which the object cuts in the lane in which the first vehicle is located from the lane on the right of the lane in which the first vehicle is located. The condition A includes: the status parameter value of the object gradually decreases and exceeds third preset duration, and an accumulated decrement of the status parameter value of the object exceeds a fourth preset threshold. The condition B includes: the status parameter value of the object gradually increases and exceeds fourth preset duration, and an accumulated increment of the status parameter value of the object exceeds a fifth preset threshold.

In a possible design, the processing unit is configured to: when the object has the motion status in which the object cuts out of the lane in which the first vehicle is located to the lane on the left of the lane in which the first vehicle is located, and a condition C is met, determine that the object is located in the lane on the left of the lane in which the first vehicle is located; when the object has the motion status in which the object cuts out of the lane in which the first vehicle is located to the lane on the left of the lane in which the first vehicle is located, and a condition C is met, determine that the object is located in the lane on the right of the lane in which the first vehicle is located; when the object has the motion status in which the object cuts in the lane in which the first vehicle is located from the lane on the left of the lane in which the first vehicle is located, and a condition D is met, determine that the object is located in the lane in which the first vehicle is located; or when the object has the motion status in which the object cuts in the lane in which the first vehicle is located from the lane on the right of the lane in which the first vehicle is located, and a condition D is met, determine that the object is located in the lane in which the first vehicle is located. The condition C includes: the status parameter value of the object gradually decreases and exceeds fifth preset duration, and the accumulated decrement of the status parameter value of the object is less than a sixth preset threshold. The condition D includes: the status parameter value of the object gradually increases and exceeds sixth preset duration, and the accumulated increment of the status parameter value corresponding to the object is greater than a seventh preset threshold.

In a possible design, the processing unit is configured to select the at least one key object from the plurality of objects based on the status parameter values of the plurality of objects and a longitudinal distance between each of the plurality of objects and the first vehicle.

In a possible design, the processing unit is configured to: calculate target parameter values respectively corresponding to the plurality of objects, where a target parameter value corresponding to each object is determined based on a first function value and a second function value, the first function value is determined based on the longitudinal distance between the object and the first vehicle and the longitudinal maximum distance, and the second function value is determined based on the status parameter value of the object; and determine the at least one key object from the plurality of objects based on the target parameter values respectively corresponding to the plurality of objects.

In a possible design, the processing unit is configured to select the at least one key object from the plurality of objects based on the status parameter values of the plurality of objects, a longitudinal distance between each of the plurality of objects and the first vehicle, a motion status of at least one object in the plurality of objects, and a lane in which the at least one object is located.

In a possible design, the apparatus further includes: a display unit, configured to display information about the at least one key object on a human machine interface of the first vehicle; or a voice unit, configured to prompt a driver with the information about the at least one key object by using a voice.

It should be understood that, for technical effects of the second aspect and the designs in the second aspect, refer to technical effects of the first aspect and the corresponding designs in the first aspect. No repeated description is provided.

According to a third aspect, the invention further provides a readable storage medium. The readable storage medium stores instructions, and when the instructions are executed, the method according to the first aspect is implemented.

## BRIEF DESCRIPTION OF DRAWINGS

FIG. 1(a) to FIG. 1(d) are schematic diagrams of examples of common problems in key object selection in the conventional technology;

FIG. 2 is a schematic diagram of a key object selection method according to an embodiment of this application;

FIG. 3 is a schematic flowchart of a key object selection method according to an embodiment of this application;

FIG. 4 is a schematic diagram of a lane area determined when three-lane four-line detection is effective according to an embodiment of this application;

FIG. 5(a) is a schematic diagram in which a left lane line closest to a first vehicle is invisible according to an embodiment of this application;

FIG. 5(b) is a schematic diagram in which both a left lane line and a right lane line that are closest to a first vehicle are invisible according to an embodiment of this application;

FIG. 6 is a schematic diagram of a track of a first vehicle in a rectangular coordinate system according to an embodiment of this application;

FIG. 7 is a schematic diagram of an original track area according to an embodiment of this application;

FIG. 8 is a schematic diagram of a track area of a first vehicle according to an embodiment of this application;

FIG. 9 is a schematic diagram of a passing area that is of a first vehicle and that corresponds to a traveling status of the first vehicle in which the first vehicle travels on a lane line according to an embodiment of this application;

FIG. 10(a) is a schematic diagram that determines that a first vehicle travels on a lane line according to an embodiment of this application;

FIG. 10(b) is a schematic diagram that determines that a first vehicle performs lane change but does not cross a lane line according to an embodiment of this application;

FIG. 10(c) is a schematic diagram that determines that a first vehicle performs lane change and crosses a lane line according to an embodiment of this application;

FIG. 11 is a schematic diagram of passing areas of a first vehicle that respectively correspond to different traveling statuses of the first vehicle according to an embodiment of this application;

FIG. 12 is a first schematic diagram of calculating a status parameter value of a target according to an embodiment of this application;

FIG. 13 is a second schematic diagram of calculating a status parameter value of a target according to an embodiment of this application;

FIG. 14 is a third schematic diagram of calculating a status parameter value of a target according to an embodiment of this application;

FIG. 15 is a schematic diagram of determining, with reference to a condition A to a condition D, a motion status of an object and a lane in which the object is located according to an embodiment of this application;

FIG. 16 is a schematic diagram of key object selection according to an embodiment of this application;

FIG. 17 is a schematic diagram of displaying a key target on a human machine interface according to an embodiment of this application;

FIG. 18 is a schematic diagram of interaction between a vehicle end and a cloud server end according to an embodiment of this application;

FIG. 19 is a first schematic diagram of a structure of an apparatus according to an embodiment of this application;

FIG. 20 is a second schematic diagram of a structure of an apparatus according to an embodiment of this application; and

FIG. 21 is a third schematic diagram of a structure of an apparatus according to an embodiment of this application.

## DESCRIPTION OF EMBODIMENTS

The following describes in detail embodiments of this application with reference to accompanying drawings.

Embodiments of this application may be applied to an intelligent driving system in a vehicle. The intelligent driving system may include a vehicle-mounted sensor. The vehicle-mounted sensor may include a radar, a camera, a global positioning system (global positioning system, GPS), a wheel speed sensor (wheel speed sensor, WSS), an inertial measurement unit (inertial measurement unit, IMU), and the like. For example, the radar may include a light wave-based optical radar (a laser radar and a millimeter-wave radar) and a sound wave-based acoustic radar (an ultrasound radar).

The intelligent driving system may further include an intelligent driving system function unit. The intelligent driving system function unit may include at least one of an advanced driver assistance system (advanced driver assistance system, ADAS) function unit, an autonomous driving system (autonomous driving system, ADS) function unit, and an active safety function unit. For example, ADAS functions include adaptive cruise control (adaptive cruise control, ACC), highway assist (highway assist, HWA), traffic jam assist (traffic jam assist, TJA), highway pilot (highway pilot, HWP), traffic jam pilot (traffic jam pilot, TJP), and the like, to implement human machine interface (human machine interface, HMI) display and vehicle acceleration/deceleration control. ADS functions include the HMI display and the vehicle acceleration/deceleration control. Active safety functions include forward collision warning (forward collision warning, FCW), automatic emergency braking (automatic emergency braking, AEB), and the like, to implement alarm and braking control.

The object in embodiments of this application may include but is not limited to a vehicle, a pedestrian, an animal, an obstacle, and the like. The vehicle may be a stationary vehicle, or may be a moving vehicle.

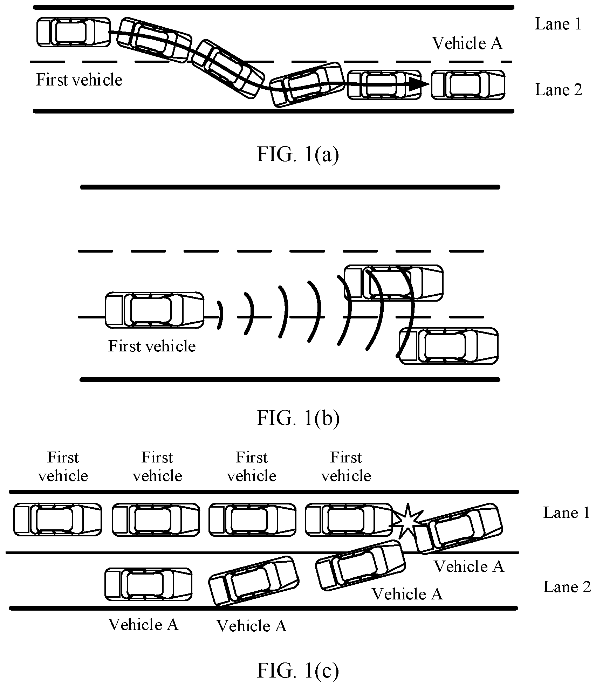

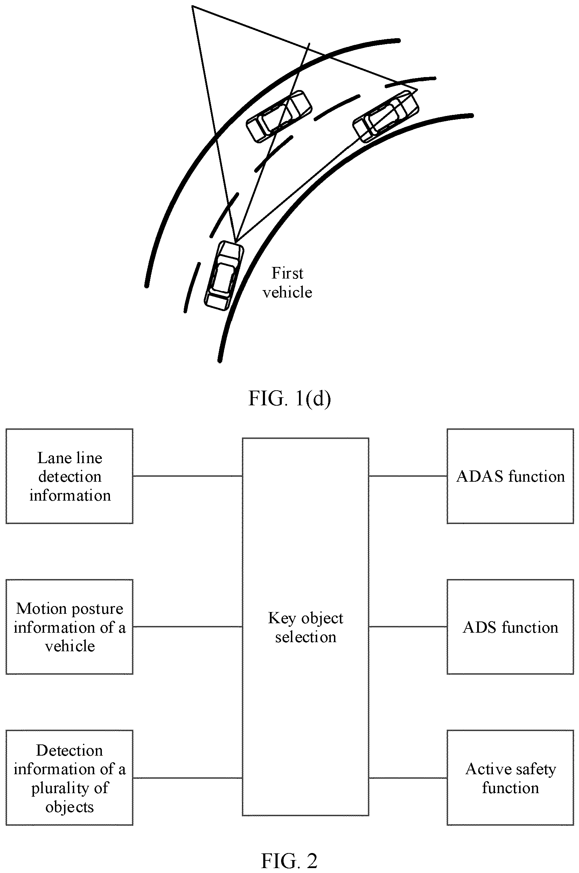

FIG. 1(a) to FIG. 1(d) show examples of common problems in key object selection in the conventional technology. As shown in FIG. 1(a), when performing lane change, a first vehicle cannot select a key object in advance with reference to an object status of a target lane obtained after lane change. In other words, after a head center of the first vehicle crosses a lane line, the first vehicle starts to use a vehicle A in a lane 2 as an object that needs to be considered. Consequently, the key object may not be able to be selected in time. As shown in FIG. 1(b), when the first vehicle travels on the lane line, the first vehicle may not be able to accurately determine that a vehicle on which lane is the key object. As shown in FIG. 1(c), when the vehicle A cuts in, because the first vehicle (a lane in which the first vehicle is located is a lane 1) may not be able to determine in advance that a vehicle cuts in the lane in which the first vehicle is located, the vehicle A cannot be used as the key object in time. As shown in FIG. 1(d), in a curve road section, the first vehicle may mistakenly select a vehicle on another lane as the key object, and miss selecting a vehicle on the lane in which the first vehicle is located. It should be understood that the cases shown in FIG. 1(a) to FIG. 1(d) are merely examples, and are not intended to limit this embodiment of this application.

Based on the foregoing description, an embodiment of this application provides a key object selection method, to accurately select a key object. As shown in FIG. 2, lane line detection information, detection information of a plurality of objects, and motion posture information of a vehicle may be obtained by using a vehicle-mounted sensor, and the foregoing three pieces of information is used as input information. A first vehicle or a cloud server end may perform, based on the input information, the method provided in embodiments of this application, determine at least one key object as an output result, and input the output result to an intelligent driving function unit. For example, at least one of an ADAS function, an ADS function, and an active safety function provides support to implement a correct control action on the first vehicle. In addition, the output result may be displayed on an HMI, or alarms a driver by using a voice or in another form. The lane line detection information and the detection information of the plurality of objects may be obtained by using a radar and/or a camera, and the motion posture information of the vehicle may be obtained by using a WSS and an IMU. In addition, the input information may alternatively be obtained in another manner. For example, the lane line detection information and the detection information of the plurality of objects may alternatively be obtained by using a technology such as vehicle to everything (vehicle to everything, V2X).

It should be understood that the method provided in this embodiment of this application may be applied to a vehicle, or may be applied to a cloud server end. In an example, the vehicle-mounted sensor in the first vehicle may perform the method provided in this embodiment of this application, to determine the at least one key object. Further, the intelligent driving function unit may control the first vehicle or alarm the driver based on the result. In another example, the vehicle-mounted sensor in the first vehicle may upload information required for determining the key object to the cloud server end, and the cloud server end performs the method provided in this embodiment of this application. Specifically, the cloud server end determines the at least one key object based on the information uploaded by the first vehicle, and sends a determined result to the first vehicle. Further, the intelligent driving function unit may control the first vehicle or alarm the driver based on the result.

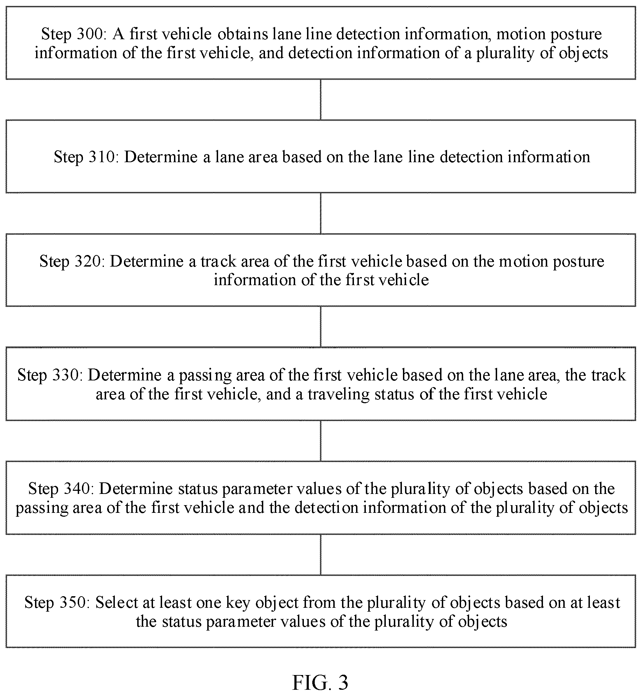

As shown in FIG. 3, an embodiment of this application provides a key target selection method. The method includes the following steps.

Step 300: A first vehicle obtains lane line detection information, motion posture information of the first vehicle, and detection information of a plurality of objects.

For example, as shown in FIG. 2, the first vehicle may obtain the lane line detection information, the motion posture information of the first vehicle, and the detection information of the plurality of objects by using the conventional technology. Details are not described herein again.

Step 310: Determine a lane area based on the lane line detection information.

The lane area includes an area (referred to as a current lane for short below) of a lane in which the first vehicle is located and an area other than the lane in which the first vehicle is located. The area other than the lane in which the first vehicle is located includes at least one of an area (referred to as a left lane for short below) of a lane on the left of the lane in which the first vehicle is located or an area (referred to as a right lane for short below) of a lane on the right of the lane in which the first vehicle is located.

If the lane area includes the current lane, the left lane, and the right lane, it indicates that the lane area includes three lanes. If the lane area includes the current lane and the left lane, or the current lane and the right lane, it indicates that the lane area includes two lanes. This embodiment of this application may be applied to a three-lane scenario and a two-lane scenario, and may be further applied to a four-lane scenario or another multi-lane scenario. This is not limited in this application. It should be understood that a possibility that an object in the lanes (namely, the left lane and the right lane) on both sides of the current lane affects traveling of the first vehicle is higher than a possibility that an object in a lane that is further away from the current lane affects traveling of the first vehicle.

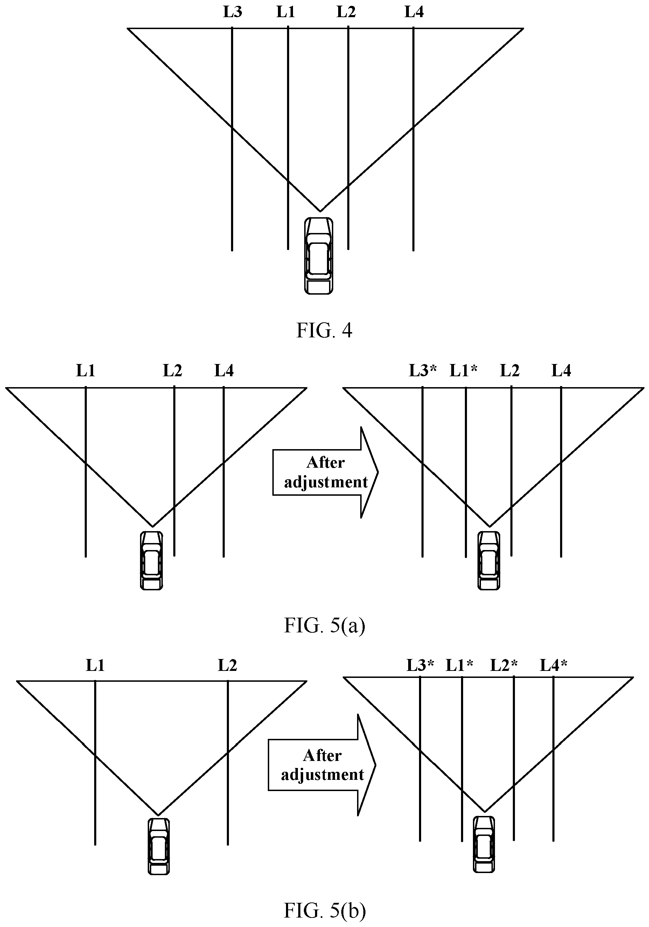

For example, refer to FIG. 4. Lane line detection information includes information about four lane lines: L1, L2, L3, and L4. Generally, a lane line that is closest to the left of a first vehicle is identified as L1 (referred to as a left lane line or a first left lane line), a lane line that is closest to the right of the first vehicle is identified as L2 (referred to as a right lane line or a first right lane line), a lane line that is second closest to the left of the first vehicle is identified as L3 (referred to as a further left lane line or a second left lane line), and a lane line that is second closest to the right of the first vehicle is identified as L4 (referred to as a further right lane line or a second right lane line). FIG. 4 shows a lane area determined when three-lane four-wire detection is effective. It is assumed that the lane line detection information includes the left lane line L1, the right lane line L2, the further left lane line L3, and the further right lane line L4, and the lane line detection information reports a correct location (which may also be referred to as effective detection). That the lane line detection information reports the correct location or the effective detection means that a correspondence between a lane line location output by a vehicle-mounted sensor and a location in which a true lane line is located is correct.

However, during actual application, in a case in which road lines are unclear or detection performance of a vehicle-mounted sensor is poor due to environment impact, there may be a scenario in which at least one of a left lane line closest to a first vehicle and a right lane line closest to the first vehicle is invisible. In FIG. 5(a), the left lane line is invisible. In this case, the lane line detection information includes information about three lane lines. In FIG. 5(b), the left lane line is invisible and the right lane line is invisible. In this case, the lane line detection information includes information about two lane lines. Further, based on the foregoing scenario, according to the following designs, the lane line detection information can be corrected, to obtain a correct lane area.

In a first possible design, for a case in which the left lane line reports an incorrect location or ineffective detection:

When it is determined, based on the lane line detection information, that a distance between the left lane line and the right lane line falls within a first preset range, and a distance between the right lane line and the first vehicle meets a preset condition, a location of the left lane line is re-determined, and a distance between the left lane line obtained after re-determining and the first vehicle meets the preset condition. An area enclosed by the left lane line obtained after re-determining and the right lane line is an area of a lane in which the first vehicle is located, and an area enclosed by the left lane line obtained before re-determining and the left lane line obtained after re-determining is an area of a lane on the left of the lane in which the first vehicle is located.

The first preset range may be [twice a lane width - a preset offset value, twice the lane width + the preset offset value]. The preset offset value may be set based on an empirical value, for example, 0.2 m. The preset offset value is related to an error in detecting a lane line horizontal distance by the vehicle-mounted sensor. The preset condition may be determined based on a vehicle width and the lane width, and may be specifically set based on the empirical value. That the distance between the right lane line and the first vehicle meets the preset condition indicates that the right lane line reports a correct location or effective detection. Therefore, if the distance between the left lane line and the right lane line falls within the first preset range, and the distance between the right lane line and the first vehicle meets the preset condition, it can be learned that the left lane line reports an incorrect location or ineffective detection, and the current left lane line is supposed to be a further left lane line. Further, the location of the left lane line is re-determined, so that the distance between the left lane line obtained after re-determining and the first vehicle meets the preset condition. To be specific, the location of the left lane line is corrected, so that an accurate lane area can be obtained. It should be understood that the preset offset value 0.2 m is specific selection in this embodiment, and a person skilled in the art may also select another preset offset value (for example, 0.1 m or 0.3 m) based on an actual situation.

For example, left lane line detection is ineffective. It is assumed that the first preset range is [twice the lane width - 0.2 m, twice the lane width + 0.2 m], and the lane line detection information is reported only for L1, L2, and L4. It is verified that a distance between L1 and L2 is twice the lane width, so that the distance falls within the first preset range, a distance between L1 and the first vehicle does not meet the preset condition, and a distance between L2 and the first vehicle meets the preset condition, as shown in the schematic diagram on the left of FIG. 5(a). Therefore, it is determined that L1 detection is ineffective, L1 is a false left lane line, and L2 is a real right lane line. In this case, a left lane line L1* may be deduced based on L2, and L1 is set as a further left lane line L3*, as shown in the schematic diagram on the right of FIG. 5(a).

In a second possible design, for a case in which the right lane line reports an incorrect location or ineffective detection:

When it is determined, based on the lane line detection information, that a distance between the left lane line and the right lane line falls within a first preset range, and a distance between the left lane line and the first vehicle meets a preset condition, a location of the right lane line is re-determined, and a distance between the right lane line obtained after re-determining and the first vehicle meets the preset condition. An area enclosed by the left lane line and the right lane line obtained after re-determining is an area of the lane in which the first vehicle is located, and an area enclosed by the right lane line obtained before re-determining and the right lane line obtained after re-determining is an area of a lane on the right of the lane in which the first vehicle is located.

For the first preset range and the preset condition, refer to related descriptions in the first possible design. No repeated description is provided. That the distance between the left lane line and the first vehicle meets the preset condition indicates that the left lane line reports a correct location or effective detection. Therefore, if the distance between the left lane line and the right lane line falls within the first preset range, and the distance between the left lane line and the first vehicle meets the preset condition, it can be learned that the right lane line reports an incorrect location or ineffective detection, and the current right lane line is supposed to be a further right lane line. Further, the location of the right lane line is re-determined, so that the distance between the right lane line obtained after re-determining and the first vehicle meets the preset condition. To be specific, the location of the right lane line is corrected, so that an accurate lane area can be obtained.

In a third possible design, for a case in which both the left lane line and the right lane line report incorrect locations or ineffective detection:

When the lane line detection information indicates that a distance between the left lane line and the right lane line falls within a second preset range, a location of the left lane line and a location of the right lane line are re-determined. An area enclosed by the left lane line obtained after re-determining and the right lane line obtained after re-determining is an area of a lane in which the first vehicle is located, an area enclosed by the right lane line obtained before re-determining and the right lane line obtained after re-determining is an area of a lane on the right of the lane in which the first vehicle is located, and an area enclosed by the left lane line obtained before re-determining and the left lane line obtained after re-determining is an area of a lane on the left of the lane in which the first vehicle is located.

It should be understood that the second preset range may be [three times the lane width - the preset offset value, three times the lane width + the preset offset value]. The preset offset value may be set based on an empirical value. For details, refer to the first possible design. The preset condition may be determined based on the vehicle width and the lane width, and may be specifically set based on the empirical value. That the distance between the left lane line and the right lane line falls within the second preset range indicates that both the left lane line and the right lane line report incorrect positions or ineffective detection, the current left lane line is supposed to be the further left lane line, and the current right lane line is supposed to be the further right lane line. Further, the locations of the left lane line and the right lane line are re-determined, so that the distance between the left lane line obtained after re-determining and the first vehicle meets the preset condition, and the distance between the right lane line obtained after re-determining and the first vehicle meets the preset condition. To be specific, the locations of the left lane line and the right lane line are corrected, so that accurate lane areas can be obtained. For example, as shown in the schematic diagram on the left of FIG. 5(b), the lane line detection information is reported only for L1 and L2. It is verified that the distance between L1 and L2 is three times the lane width, so that the distance falls within the second preset range. Therefore, it is determined that both L1 detection and L2 detection are ineffective, L1 is a false left lane line, and L2 is a false right lane line. In this case, the left lane line L1* and a right lane line L2* may be deduced, L1 is set as the further left lane line L3*, and L2 is set as a further right lane line L4*.

The foregoing part describes a technical process of the step 310 in FIG. 3. Next, step 320 is performed.

Step 320: Determine a track area of the first vehicle based on the motion posture information of the first vehicle.

For example, the determining a track area of the first vehicle may specifically include the following steps:
Step 1: Determine an original track area of the first vehicle.

A moving track of the first vehicle may be determined based on the motion posture information of the first vehicle, and the original track area is determined based on the moving track of the first vehicle and a preset extension width.

Equations of the moving tracks of the first vehicle may be represented by y = f(x) and x = g(t), and expressions are respectively as follows:

$$y = \frac{1}{2}\kappa \cdot x^2 + \frac{1}{6}\dot{\kappa} \cdot x^3$$

$$x = v_x \cdot t + \frac{1}{2}a_x \cdot t^2$$

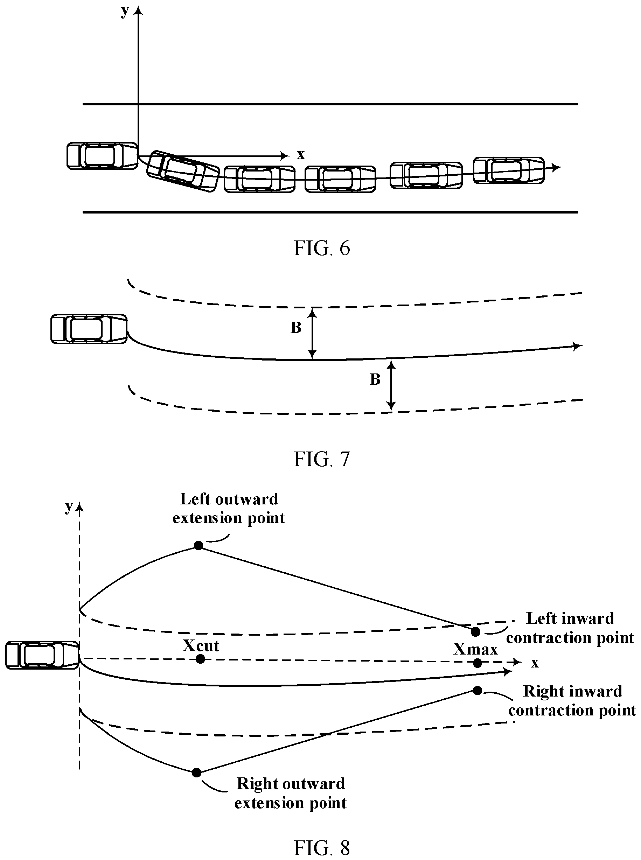

A vehicle coordinate system may be defined according to the ISO 8855 standard. A y axis is a horizontal location of the first vehicle, and a left side of the first vehicle is a positive direction of the y axis. An x axis is a longitudinal location of the first vehicle, and a traveling direction of the first vehicle is a positive direction of the x axis. $\kappa$ is a turning curvature, $\dot{\kappa}$ is a curvature change rate, $v_x$ is a longitudinal speed of the first vehicle, $a_x$ is a longitudinal acceleration of the first vehicle, and t is time. The foregoing parameters may be provided by the motion posture information of the first vehicle. FIG. 6 is a schematic diagram of a moving track of the first vehicle.

Further, on the basis of y = f(x), a preset extension distance B is separately extended towards two sides in a direction of the horizontal location of the first vehicle, to obtain the original track area, as shown in FIG. 7. B may be set based on the empirical value. For example, a value of B is greater than a half vehicle width and less than a half lane width. For example, it is assumed that a typical vehicle width is 1.8 m, and a typical lane width is 3.5 m. In this case, $0.9 \leq B \leq 1.75$. To be specific, for example, B may be 1.2 m. Equations of a left boundary and a right boundary of the original track area are as follows.

Left boundary:

$$y = \frac{1}{2}\kappa \cdot x^2 + \frac{1}{6}\dot{\kappa} \cdot x^3 + B$$

Right boundary:

$$y = \frac{1}{2}\kappa \cdot x^2 + \frac{1}{6}\dot{\kappa} \cdot x^3 - B$$

It should be understood that the foregoing equations of the moving tracks are merely examples. Another coordinate system, for example, a Frenet coordinate system, may also be used in this embodiment of this application.

Step 2: Adjust the original track area to determine the track area of the first vehicle.

A longitudinal maximum distance $x_{max}$ corresponding to the first vehicle and a longitudinal cut-in distance $x_{cut}$ corresponding to the first vehicle may be determined based on the motion posture information of the first vehicle. The longitudinal maximum distance $x_{max}$ indicates a range in which traveling of the first vehicle may be affected at a current speed of the first vehicle. The longitudinal cut-in distance $x_{cut}$ indicates a possible location at which another object vertically cuts in the lane in which the first vehicle is located. Based on this, the track area of the first vehicle may be determined by using any one of the following solutions:

Solution 1: The track area of the first vehicle is determined based on the original track area, the longitudinal maximum distance $x_{max}$, the longitudinal cut-in distance $x_{cut}$, and an extension width corresponding to the longitudinal cut-in distance $x_{cut}$. The extension width corresponding to the longitudinal cut-in distance $x_{cut}$ is greater than the preset extension width.

Solution 2: The track area of the first vehicle is determined based on the original track area, the longitudinal maximum distance $x_{max}$, and an extension width corresponding to the longitudinal maximum distance $x_{max}$. The extension width corresponding to the longitudinal maximum distance $x_{max}$ is less than the preset extension width.

Solution 3: The track area of the first vehicle is determined based on the original track area, the longitudinal maximum distance $x_{max}$, the extension width corresponding to the longitudinal maximum distance $x_{max}$, the longitudinal cut-in distance $x_{cut}$, and the extension width corresponding to the longitudinal cut-in distance $x_{cut}$. The extension width corresponding to the longitudinal maximum distance $x_{max}$ is less than the preset extension width, and the extension width corresponding to the longitudinal cut-in distance $x_{cut}$ is greater than the preset extension width.

For example, the following uses the solution 3 as an example to describe a specific process in which the first vehicle adjusts the original track area, to determine the track area of the first vehicle.

First, the longitudinal maximum distance $x_{max}$ is calculated based on a current speed $v_{ego}$ and time headway THW of the first vehicle, as shown in the following formula:

$$x_{max} = v_{ego} \cdot THW \cdot p_x$$

THW = a relative distance between two points that are of the first vehicle and that are closest to the object/the current speed $v_{ego}$ of the first vehicle. THW indicates how long the first vehicle takes to travel to the location at which the object is located at a current moment. In an intelligent driving system, THW may be adjusted and set by a driver through a human machine interface, and a value range of THW may be 1.0s to 2.5s. In a scenario in which the driver actively drives, THW is related to factors such as different ages and different driving styles of the drivers, and the value range of THW may be 0.8s to 2s. $p_x$ is a longitudinal distance amplification coefficient, and a value range of $p_x$ is 1.0 to 1.5. For example, when $v_{ego}$=120 km/h=30 m/S, THW=1s, and $p_x$=1s, $x_{max}$=30 m may be obtained according to the foregoing formula.

Then, the longitudinal cut-in distance $x_{cut}$ is determined based on the current speed $v_{ego}$ of the first vehicle.

Specifically, a correspondence between the longitudinal cut-in distance $x_{cut}$ and a vehicle speed when the another object vertically cuts in the current lane from another lane may be calibrated by using a method for real vehicle test or data statistics. A calibrated correspondence may form a calibration lookup table. For example, the first vehicle stores in advance the correspondence used to indicate the vehicle speed and the longitudinal cut-in distance $x_{cut}$. Further, the first vehicle may determine, based on the current speed $v_{ego}$ of the first vehicle, the longitudinal cut-in distance $x_{cut}$ corresponding to the current speed $v_{ego}$ of the first vehicle:

$$x_{cut} = MAP(v_{ego})$$

MAP is the calibration lookup table, and the calibration lookup table may be obtained based on the real vehicle test or data statistics. For example, the MAP may be shown in Table 1.

**Table 1**

| $v_{ego}$ (km/h) | $x_{cut}$ (m) |
|---|---|
| 10 | 2-5 |
| 20 | 6-9 |
| 30 | 8-13 |
| 40 | 11-18 |
| 50 | 12-21 |
| 60 | 20-30 |
| 70 | 22-35 |
| 80 | 22-35 |
| 90 | 25-38 |
| 100 | 27-42 |
| 110 | 30-45 |
| 120 | 33-50 |

Finally, track boundary points corresponding to the longitudinal maximum distance $x_{max}$ in the original track area are respectively defined as a left inward contraction point and a right inward contraction point, and horizontal distances corresponding to the two inward contraction points are reduced inward by a first preset value, that is, adjusted from the preset extension distance B to the extension width corresponding to the longitudinal maximum distance. For example, a value range of the first preset value herein may be 0.5 m to 1 m. In addition, track boundary points corresponding to the longitudinal cut-in distance $x_{cut}$ in the original track area are respectively defined as a left outward extension point and a right outward extension point, and horizontal distances corresponding to the two outward extension points are increased outward by a second preset value, that is, adjusted from the preset extension distance B to the extension width corresponding to the longitudinal cut-in distance. For example, the second preset value herein may be 0.2 m to 1 m. A larger second preset value is more conservative and secure, and a smaller second preset value is more radical and efficient.

Further, a first segment of the track boundary is obtained through division from a start point to the outer extension points, a second segment of the track boundary is obtained through division from the outer extension points to the inward contraction points, and in the two segments, the horizontal distance is adjusted by using an interpolation method, to obtain the track area of the first vehicle shown in FIG. 8. The interpolation method may be a linear interpolation method or a spline curve interpolation method. This is not limited in this application.

It should be understood that both the longitudinal maximum distance and the longitudinal cut-in distance are variable. The track area that can be obtained by using the foregoing solution is a fusiform area.

The foregoing part describes a technical process of the step 320 in FIG. 3. In the track area of the first vehicle obtained by using the foregoing design, a location at which another object may cut in the lane in which the first vehicle is located and a longitudinal distance range that is greatly affected by the object are relatively comprehensively considered, which helps select a key object while considering safety of the first vehicle.

After the step 320 is completed, step 330 is performed.

Step 330: Determine a passing area of the first vehicle based on the lane area, the track area of the first vehicle, and a traveling status of the first vehicle.

The following describes, for different traveling statuses of the first vehicle, the passing area that is of the first vehicle and that corresponds to each traveling status.

1. If the first vehicle has the traveling status in which the first vehicle travels in an area without a lane line, the passing area of the first vehicle is the track area of the first vehicle, and a longitudinal length of the passing area of the first vehicle is determined based on the longitudinal maximum distance.
In a possible scenario, when the first vehicle determines that the lane area is ineffective in the step 310, the passing area of the first vehicle is the track area of the first vehicle, that is, the track area of the first vehicle determined in the step 320. That the first vehicle determines that the lane area is ineffective in the step 310 may be a case in which no lane line is detected.

2. If the first vehicle has the traveling status in which the first vehicle travels in the lane in which the first vehicle is located, the passing area of the first vehicle is the area of the lane in which the first lane is located, and a longitudinal length of the passing area of the first vehicle is determined based on the longitudinal maximum distance.

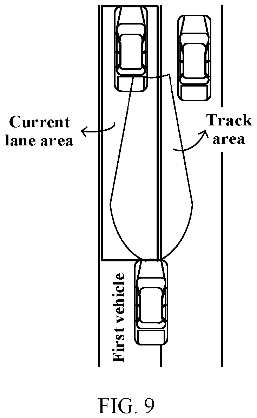

3. If the first vehicle has the traveling status in which the first vehicle travels on the lane line, the passing area of the first vehicle is determined based on a current lane area and the track area, and a longitudinal length of the passing area of the first vehicle is determined based on the longitudinal maximum distance. As shown in FIG. 9, the first vehicle has a status in which the first vehicle travels on the lane line, and the passing area of the first vehicle is a union set of the area (that is, the current lane area) of the lane in which the first vehicle is located and the track area of the first vehicle.

For example, the first vehicle may determine, by using but not limited to the following method, that the traveling status of the first vehicle is a status in which the first vehicle travels on the lane line.

When the first vehicle remains in a first status or a second status for more than first preset duration, it is determined that the first vehicle has the traveling status in which the first vehicle travels on the lane line. In the first status, an included angle between a head center line of the first vehicle and the left lane line is less than a first preset threshold, and a vertical distance from a head center point of the first vehicle to the left lane line is less than a second preset threshold. In the second status, an included angle between the head center line of the first vehicle and the right lane line is less than the first preset threshold, and a vertical distance from the head center point of the first vehicle to the right lane line is less than the second preset threshold.

4. If the first vehicle has the traveling status in which the first vehicle performs lane change but does not cross the lane line, the passing area of the first vehicle is a target lane obtained after lane change of the first vehicle, and a longitudinal length of the passing area of the first vehicle is determined based on the longitudinal maximum distance.

For example, the first vehicle may determine, by using the following method, that the traveling status of the first vehicle is a status in which the first vehicle performs lane change but does not cross the lane line.

When the first vehicle remains in a third status or a fourth status for more than second preset duration, it is determined that the first vehicle has the traveling status in which the first vehicle performs lane change but does not cross the lane line.

In the third status, an included angle between a head center line of the first vehicle and the left lane line is greater than a third preset threshold, a vertical distance from a head center point of the first vehicle to the left lane line decreases and is greater than 0, and a vertical distance from the head center point of the first vehicle to the right lane line increases and is less than a preset lane width. In the fourth status, an included angle between the head center line of the first vehicle and the right lane line is greater than the third preset threshold, a vertical distance from the head center point of the first vehicle to the right lane line decreases and is greater than 0, and a vertical distance from the head center point of the first vehicle to the left lane line increases and is less than the preset lane width.

In the foregoing solution, the head center line is used as an example to determine the traveling status of the first vehicle. It may be understood that, during actual application, the solution is not limited to the head center line.

5. If the first vehicle has the traveling status in which the first vehicle performs lane change and crosses the lane line, the passing area of the first vehicle is the area of the lane in which the first vehicle is located. In this case, the passing area of the first vehicle is an area of a lane (which may also be described as a target lane) obtained after lane change, and a longitudinal length of the passing area of the first vehicle is determined based on the longitudinal maximum distance.

For example, the first vehicle may determine, by using but not limited to the following method, that the traveling status of the first vehicle is a status in which the first vehicle performs lane change and crosses the lane line.

In a lane line detection periodicity, when a vertical distance from a head center point of the first vehicle to the left lane line suddenly changes from a preset lane width to 0, and a vertical distance from the head center point of the first vehicle to the right lane line suddenly changes from 0 to the preset lane width, it is determined that the first vehicle performs lane change to the left lane and crosses the left lane line.

Alternatively, in a lane line detection periodicity, when a vertical distance from a head center point of the first vehicle to the left lane line suddenly changes from 0 to a preset lane width, and a vertical distance from the head center point of the first vehicle to the right lane line suddenly changes from the preset lane width to 0, it is determined that the first vehicle performs lane change to the right lane and crosses the first right lane line.

The following describes, by using examples, specific methods for determining whether the first vehicle travels on the lane line, determining that the first vehicle performs lane change but does not cross the lane line, and determining that the first vehicle performs lane change and crosses the lane line.

$$y(x) = C_0 + C_1 x + \frac{1}{2}C_2 x^2 + \frac{1}{6}C_3 x^3$$

The foregoing equation is a lane line detection equation, and a Clothoid curve is used. The item $C_0$ indicates the horizontal distance from the lane line to the head center point. The item $C_1$ indicates an included angle between the lane line and a longitudinal axis of the vehicle (or described as the head center point). The item

$C_2$ indicates a curvature of the lane line. The item $C_3$ indicates a curvature change rate of the lane line. There are the four parameters on the lane lines on both left and right sides, $\{C_{0l}, C_{1l}, C_{2l}, C_{3l}\}$ on the left side and $\{C_{0r}, C_{1r}, C_{2r}, C_{3r}\}$ on the right side respectively.

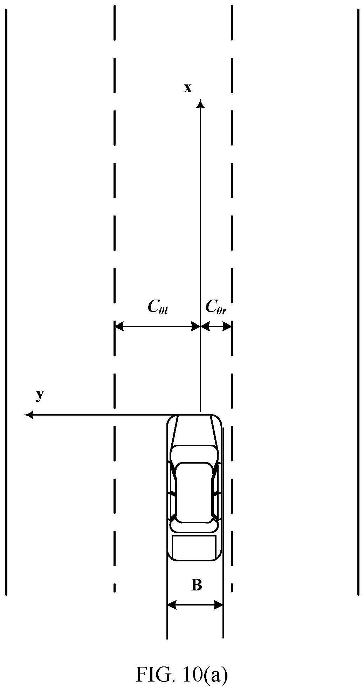

Specifically, as shown in FIG. 10(a), it is determined, based on the following conditions, that the first vehicle travels on the lane lines.

When $|C_{0l}|$ < a first threshold, $|C_{1l}|$ < a second threshold (that is, the first vehicle is in the first status), and this remains for the first preset duration, it is determined that a left side of the first vehicle travels on the lane line.

Alternatively, when $|C_{0r}|$ < a first threshold, $|C_{1r}|$ < a second threshold (that is, the first vehicle is in the second status), and this remains for the first preset duration, it is determined that a right side of the first vehicle travels on the lane line.

It is assumed that a width of the first vehicle is A, and the first threshold has a value range of $[\frac{A}{2} - 0.2$, $\frac{A}{2} + 0.2]$, for example, may be $\frac{A}{2}$, the second threshold has a value range of $0.8° \sim 1.5°$, for example, may be $1°$, and the first preset duration has a value range of 2s to 5s, for example, may be 2s.

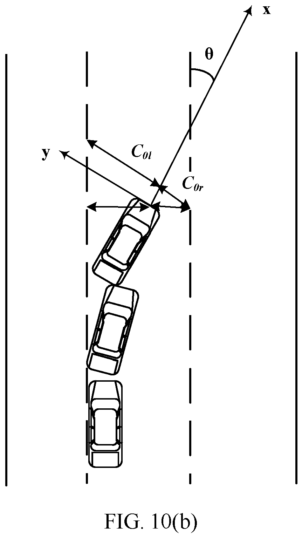

Specifically, as shown in FIG. 10(b), it is determined, based on the following conditions, that the first vehicle performs lane change but does not cross the lane line.

Included angles between the lane lines on both sides and the longitudinal axis x of the first vehicle are calculated according to lane line equations:

$$\theta_l = atan(C_{1l}), \ \theta_r = atan(C_{1r}), \ and \ \theta_l = \theta_r,$$

which are both marked as θ in FIG. 10(b).

When $|C_{0l} \cdot cos(\theta_l)|$ gradually decreases but is greater than 0, $|C_{0r} \cdot cos(\theta_r)|$ gradually increases but does not exceed the lane width, $\frac{|C_{1l}+C_{1r}|}{2} > a$ third threshold (that is, the first vehicle is in the third status), and this remains for the second preset duration in terms of an overall trend, it is determined that the first vehicle performs lane change to the left lane but does not cross the first left lane line.

Alternatively, when $|C_{0l} \cdot cos(\theta_l)|$ gradually increases but does not exceed the lane width, $|C_{0r} \cdot cos(\theta_r)|$ gradually decreases but is greater than 0, $\frac{|C_{1l}+C_{1r}|}{2} > a$ third threshold (that is, the first vehicle is in the fourth status), and this remains for the second preset duration in terms of an overall trend, it is determined that the first vehicle performs lane change to the right lane but does not cross the first right lane line.

A value range of the second threshold is 1.5° to 2.5°, for example, 2°. A value range of the second preset duration is 0.1s to 0.3s, for example, 0.2s.

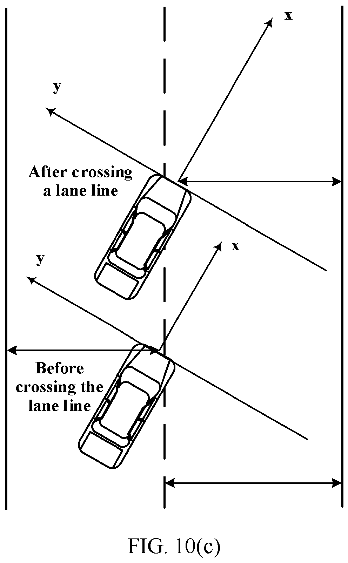

Specifically, as shown in FIG. 10(c), it is determined, based on the following conditions, that the first vehicle performs lane change and crosses the lane line.

In a lane line detection periodicity, when $|C_{0l}|$ suddenly changes from 0 to the lane width, and $|C_{0r}|$ suddenly changes from the lane width to 0, it is determined that the first vehicle performs lane change to the left lane and crosses the first left lane line.

Alternatively, in a lane line detection periodicity, when $|C_{0l}|$ suddenly changes from the lane width to 0, and $|C_{0r}|$ suddenly changes from 0 to the lane width, it is determined that the first vehicle performs lane change to the right lane and crosses the first right lane line.

The lane line detection periodicity is usually about 60 ms. For example, the lane line detection periodicity may alternatively be any proper value in a range of 40 ms or 100 ms. This is not limited in this application.

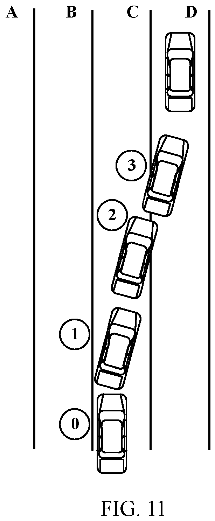

The following describes, with reference to FIG. 11, the passing areas of the first vehicle that respectively correspond to the different traveling statuses of the first vehicle.

The traveling status of the first vehicle corresponding to a location 0 is a status in which the first vehicle travels in the current lane. In this case, the passing area of the first vehicle is the current lane, that is, a traveling area delimited by B and C, and the longitudinal length of the passing area of the first vehicle is the longitudinal maximum distance.

The traveling status of the first vehicle corresponding to a location 1 is a status in which the first vehicle performs lane change but does not cross the lane lines. In this case, the passing area of the first vehicle is the target lane, that is, a traveling area delimited by C and D, and the longitudinal length of the passing area of the first vehicle is the longitudinal maximum distance.

The traveling status of the first vehicle corresponding to a location 2 is a status in which the first vehicle performs lane change and crosses the lane lines. In this case, the passing area of the first vehicle is the current lane, that is, the area delimited by C and D, and the longitudinal length of the passing area of the first vehicle is the longitudinal maximum distance.

The traveling status of the first vehicle corresponding to a location 3 is a status in which the first vehicle travels in the current lane. In this case, the first vehicle has completed lane change, the passing area of the first vehicle is the current lane, that is, the area delimited by C and D, and the longitudinal length of the passing area of the first vehicle is the longitudinal maximum distance.

The foregoing part describes a technical process of the step 320 in FIG. 3. According to the foregoing design, a plurality of possible scenarios in which the first vehicle travels are considered, to provide a reference background for implementing key object selection in various scenarios.

After the step 330 is completed, step 340 is performed.

Step 340: Determine status parameter values of the plurality of objects based on the passing area of the first vehicle and the detection information of the plurality of objects. The status parameter value of each object is used to indicate a degree of overlapping between the object and the passing area of the first vehicle.

The following uses detection information of any object in the detection information of the plurality of objects as an example for description. The following cases are included.

When it is determined, based on the detection information of the object, that the object is located on the left side of the first vehicle, a vertical distance between a center point of the object and a left boundary of the passing area of the first vehicle is determined based on the passing area of the first vehicle and the detection information of the object. Further, the status parameter value of the object is determined based on the vertical distance between the center point of the object and the left boundary of the passing area of the first vehicle, a distance between the center point of the object and the head center line of the first vehicle, and a width of the object.

Alternatively, when it is determined, based on the detection information of the object, that the object is located on the right side of the first vehicle, a vertical distance between a center point of the object and a right boundary of the passing area of the first vehicle is determined based on the passing area of the first vehicle and the detection information of the object. Further, the status parameter value of the object is calculated based on the vertical distance between the center point of the object and the right boundary of the passing area of the first vehicle, a distance between the center point of the object and the head center line of the first vehicle, and a width of the object.

Alternatively, when it is determined, based on the detection information of the object, that a center point of the object falls on the head center line of the first vehicle, a vertical distance between the center point of the object and a right boundary of the passing area of the first vehicle is determined based on the passing area of the first vehicle and the detection information of the object. Further, the status parameter value of the object is determined based on the vertical distance between the center point of the object and the right boundary of the passing area of the first vehicle, and a width of the object. It should be understood that because the center point of the object falls on the head center line of the first vehicle, the vertical distance between the center point of the object and the right boundary of the passing area of the first vehicle in the foregoing solution herein may also be replaced with the vertical distance between the center point of the object and the left boundary of the passing area of the first vehicle.

It should be understood that the center point of the object may alternatively be a tail center point of the object, a head center point of the object, a geometric center point of the object, a detection point that is of the object and that is closest to the first vehicle, or the like. This is not limited in this application.

Specifically, the status parameter value of the object may be calculated by using but is not limited to the following method.

Method 1

Step 1: Determine, based on a positive or negative horizontal relative distance $y_V$ of the object, whether the object is on the left side or the right side of the first vehicle. If the horizontal relative distance $y_V$ of the object is positive, the object is on the left side of the first vehicle, and a value of $y_V$ is equal to a value of a vertical distance between the center point of the object and the center line of the first vehicle. If the horizontal relative distance $y_V$ of the object is negative, the object is on the right side of the first vehicle, and a value of $y_V$ is equal to an opposite number of the value of the vertical distance between the center point of the object and the center line of the first vehicle. A vehicle coordinate system may be defined according to the ISO 8855 standard. A y axis is a horizontal location of the first vehicle, and a left side of the first vehicle is a positive direction of the y axis. An x axis is a longitudinal location of the first vehicle, and a traveling direction of the first vehicle is a positive direction of the x axis.

Step 2: When the object is on the left side of the first vehicle, the status parameter value of the object $= \frac{w_{occ}}{y_{VL}} \times 100\%$, and an overlapping width $w_{occ}$ between the object and the first vehicle $= y_{VL} - y_V + \frac{w_{obj}}{2}$. $w_{obj}$ is the width of the object, and a value of a left horizontal boundary distance $y_{VL}$ corresponding to the object is a value of a distance between the head center point of the first vehicle and the left boundary of the passing area of the first vehicle.

When the object is on the right side of the first vehicle, the status parameter value of the object $= \frac{w_{occ}}{-y_{VR}} \times 100\%$, and an overlapping width $w_{occ}$ between the object and the first vehicle $= -y_{VR} + y_V + \frac{w_{obj}}{2}$. $w_{obj}$ is the width of the object, and a value of a right horizontal boundary distance $y_{VR}$ corresponding to the object is an opposite number of a value of a distance between the head center point of the first vehicle and the right boundary of the passing area of the first vehicle.

$y_{VL}$ is the value of the distance between the head center point of the first vehicle and the left boundary of the passing area of the first vehicle, and may indicate a remaining width on the left side that can be used for driving. Therefore, when the object completely occupies the remaining width of the lane, that is, $w_{occ}=y_{VL}$, the status parameter value of the object=100%. When the object is outside the left boundary, $w_{occ}=0$, and the status parameter value of the object=0%.

In a case of a curve, the overlapping width between the object and the first vehicle is calculated based on a predicted track line of the first vehicle extending to the object. For details, refer to descriptions in example 2 below.

It should be understood that when the center line of the object is aligned with the center line of the first vehicle, the status parameter value of the object=1.

Method 2

For specific content of step 1, refer to the specific content of the step 1 in the foregoing example 1. Repeated content is not described again.

Step 2: The status parameter value of the object=$(w_{occ}/w_{obj})$*100%.

When the object is on the left side of the first vehicle, the overlapping width $w_{occ}$ between the object and $\text{the first vehicle} = y_{VL} - y_V + \frac{w_{obj}}{2}$ . $w_{obj}$ is the width of the object, and the value of the left horizontal boundary distance $y_{VL}$ corresponding to the object is the value of the distance between the head center point of the first vehicle and the left boundary of the passing area of the first vehicle.

When the object is on the right side of the first vehicle, the overlapping width $w_{occ}$ between the object and $\text{the first vehicle} = -y_{VR} + y_V + \frac{w_{obj}}{2}$ . $w_{obj}$ is the width of the object, and the value of the right horizontal boundary distance $y_{VR}$ corresponding to the object is the opposite number of the value of the distance between the head center point of the first vehicle and the right boundary of the passing area of the first vehicle.

When the object completely enters the passing area, $w_{occ}=w_{obj}$, and the status parameter value of the object=100%. When the object is completely outside the passing area of the first vehicle, $w_{occ}=0$, and the status parameter value of the object=0%.

It should be understood that the method 1 and the method 2 are merely examples, and are not intended to limit this application. In addition, in this application, not only the vehicle coordinate system is used, but another coordinate system, for example, a Frenet coordinate system, may also be used.

The following uses example 1 and example 2 as examples to describe a specific method for obtaining the foregoing parameters $y_{VL}$, $y_V$, and $y_{VR}$ by the first vehicle. It should be understood that the following example 1 and example 2 are merely examples, and are not intended to limit this application.

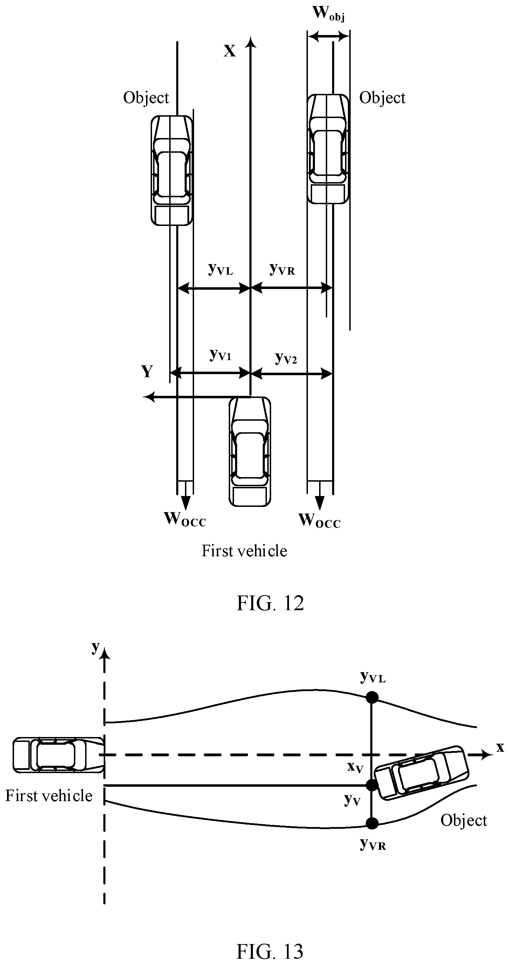

Example 1: As shown in FIG. 12, a rectangular coordinate system is established by using the center line of the first vehicle as an x axis and a direction perpendicular to the center line of the first vehicle as a y axis. y is the horizontal location of the first vehicle, and a left direction is a positive direction. x is the longitudinal location of the first vehicle, and a forward direction is a positive direction. The passing area of the first vehicle is the current lane. As shown in FIG. 12, $y_{VL}$ and $y_{V1}$ that correspond to a vehicle 1 and $y_{VR}$ and $y_{V2}$ that correspond to a vehicle 2 are marked.

For another example, as shown in FIG. 13, if the passing area of the first vehicle is a fusiform area, it is assumed that an equation of the left boundary is $y_l = f_1(x)$, an equation of the right boundary is $y_r = f_2(x)$, and a location of a detection point V of a target vehicle relative to the first vehicle is $(x_V, y_V)$, horizontal boundary points at a same longitudinal location $x_V$ are calculated as follows:

$$y_{VL} = f_1(x_V)$$

$$y_{VR} = f_2(x_V)$$

Example 2

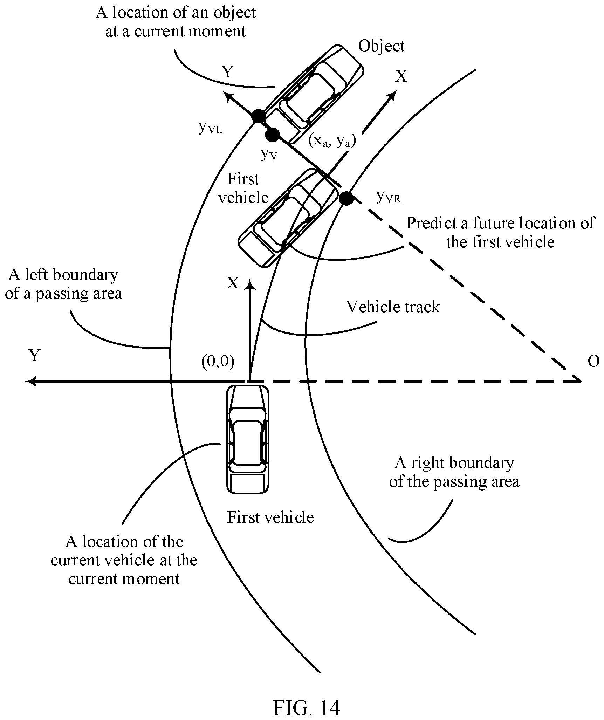

This example may simultaneously adapt to the foregoing parameters $y_{VL}$, $y_V$, and $y_{VR}$ obtained in different scenarios in which the vehicle travels on a straight lane and a curve. As shown in FIG. 14, a specific technical solution is as follows.

　　1. In the Frenet coordinate system, calculate a travel distance S of the first vehicle along a track, so that the first vehicle can arrive at a location of a tail of a front vehicle.

$$S = 2\,asin\left(\frac{x_V}{2R}\right) * R$$

$x_V$ is a relative longitudinal distance that is between the object and the first vehicle and that is measured at a current moment, and R is a turning radius of the first vehicle.
　　2. Calculate time required by the first vehicle to arrive at a location of the object.

The time t of arrival meets a formula:

$$v_{ego} \cdot t + \frac{1}{2} a_{ego} \cdot t^2 = S$$

$v_{ego}$ is a resultant velocity of the first vehicle, and $a_{ego}$ is a resultant acceleration of the first vehicle.

3. Predict an arrival location of the first vehicle based on the time t of arrival.

A relative longitudinal distance $x_a$ and a relative horizontal distance $y_a$ of the predicted location are calculated as follows:

$$x_a = v_x \cdot t + \frac{1}{2} a_x \cdot t^2$$

$$y_a = \frac{1}{2}\kappa \cdot x_a{}^2 + \frac{1}{6}\dot{\kappa} \cdot x_a{}^3$$

4. Calculate a boundary point corresponding to the object based on the predicted position.

The coordinate system is converted from a current location $(0,0)$ to $(x_a, y_a)$, and a horizontal distance of the object relative to the predicted position is calculated in a new coordinate system. The left horizontal boundary distance corresponding to the object and the right horizontal boundary distance corresponding to the object are respectively calculated based on a left horizontal distance $y_{0l}$ and a right horizontal distance $y_{0r}$ that are of the passing area of the first vehicle and that are at the vehicle head as follows:

$$y_{VL} = y_a + y_{0l}$$

$$y_{VR} = y_a + y_{0r}$$

The coordinate system that uses the point $(0,0)$ as an origin is a vehicle body coordinate system of the current location, and the coordinate system that uses the point $(x_a, y_a)$ as an origin is a vehicle body coordinate system of the predicted position.

In the step 340, the status parameter value of the object may be obtained based on the examples 1 and 2 and the methods 1 and 2.

Further, monitoring a change trend of the status parameter value of the object, and determining a motion status of the object based on the change trend of the status parameter value of the object and the preset condition include:

When the object is located in the lane in which the first vehicle is located, a head of the object faces leftward, and a condition A is met, it is determined that the object has the motion status in which the object cuts out of the lane in which the first vehicle is located to the lane on the left of the lane in which the first vehicle is located.

Alternatively, when the object is located in the lane in which the first vehicle is located, a head of the object faces rightward, and a condition A is met, it is determined that the object has the motion status in which the object cuts out of the lane in which the first vehicle is located to the lane on the right of the lane in which the first vehicle is located.

Alternatively, when the object is located in a lane on the left of the lane in which the first vehicle is located, a head of the object faces rightward, and a condition B is met, it is determined that the object has the motion status in which the object cuts in the lane in which the first vehicle is located from the lane on the left of the lane in which the first vehicle is located.

Alternatively, when the object is located in a lane on the right of the lane in which the first vehicle is located, a head of the object faces leftward, and a condition B is met, it is determined that the object has the motion status in which the object cuts in the lane in which the first vehicle is located from the lane on the right of the lane in which the first vehicle is located.

It should be understood that a lane in which the object is located and an orientation of the head of the object may be determined based on the detection information of the object.

The condition A includes: the status parameter value of the object gradually decreases and exceeds third preset duration, and an accumulated decrement of the status parameter value of the object exceeds a fourth preset threshold. The condition B includes: the status parameter value of the object gradually increases and exceeds fourth preset duration, and an accumulated increment of the status parameter value of the object exceeds a fifth preset threshold.

A value range of the third preset duration is 100 ms to 300 ms, for example, may be 100 ms. Longer third preset duration indicates later time for cut-out object recognition, and is more conservative and secure. A value range of the fourth preset threshold is 20% to 50%. For example, the fourth preset threshold may be 30%. A larger fourth preset threshold indicates later time for cut-out object recognition, and is more conservative and secure. A value range of the fourth preset duration is 50 ms to 200 ms, for example, may be 100 ms. Longer fourth preset duration indicates later time for cut-in object recognition, and is more radical and efficient but less secure. A value range of the fifth preset threshold is 10% to 40%. For example, the fifth preset threshold may be 20%. A smaller fifth preset threshold indicates earlier time for cut-in object determining, and is more conservative and secure.

In addition, the first vehicle may further determine, based on the foregoing determining, the lane in which the object is located.

When the object cuts out of the lane in which the first vehicle is located to the lane on the left of the lane in which the first vehicle is located, and a condition C is met, it is determined that the object is located in the lane on the left of the lane in which the first vehicle is located.

Alternatively, when the object cuts out of the lane in which the first vehicle is located to the lane on the right of the lane in which the first vehicle is located, and a condition C is met, it is determined that the object is located in the lane on the right of the lane in which the first vehicle is located.

Alternatively, when the object cuts in the lane in which the first vehicle is located from the lane on the left of the lane in which the first vehicle is located, and a condition D is met, it is determined that the object is located in the lane in which the first vehicle is located.

Alternatively, when the object cuts in the lane in which the first vehicle is located from the lane on the right of the lane in which the first vehicle is located, and a condition D is met, it is determined that the object is located in the lane in which the first vehicle is located.

The condition C includes: the status parameter value of the object gradually decreases and exceeds fifth preset duration, and the accumulated decrement of the status parameter value of the object exceeds a sixth preset threshold. The condition D includes: the status parameter value of the object gradually increases and exceeds sixth preset duration, and the accumulated increment of the status parameter value corresponding to the object exceeds a seventh preset threshold.

A value range of the fifth preset duration is 100 ms to 300 ms. Longer fifth preset duration indicates later time for determining that the object leaves the current lane, and is more secure and conservative but more inefficient. A value range of the sixth preset threshold is 80% to 100%. For example, the sixth preset threshold may be 90%. A larger sixth preset threshold is more secure and conservative but more inefficient. A value range of the sixth preset duration is 50 ms to 200 ms. Longer sixth preset duration indicates later time for determining that the cut-in object is classified into the current lane, and is more radical and efficient. A value range of the seventh preset threshold is 40% to 80%. For example, the seventh preset threshold may be 60%. A larger seventh preset threshold indicates later time for determining that the cut-in object is classified into the current lane, and is more radical and efficient but less secure.

It should be understood that the condition A to the condition D are merely examples, and a person skilled in the art makes modifications to the foregoing conditions without departing from the protection scope of this application as defined by the claims.

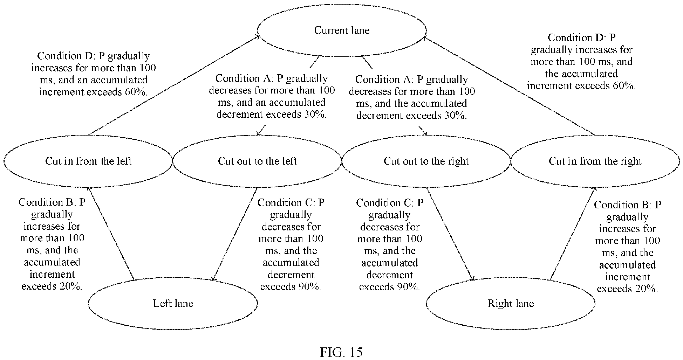

In an example, FIG. 15 is a schematic diagram of determining, with reference to the foregoing condition A to condition D, the motion status of the object and the lane in which the object is located. According to the foregoing determining, the motion status of the object and the lane in which the object is located can be accurately obtained. Therefore, a strong support can be provided for key object selection.

After the step 340 is completed, step 350 is performed.

Step 350: Select at least one key object from the plurality of objects based on the status parameter values of the plurality of objects.

In a possible design, at least one key object is determined from the plurality of objects based on the status parameter values of the plurality of objects and a longitudinal distance between each of the plurality of objects and the first vehicle.

The foregoing design is mainly applicable to a scenario in which change trends of the status parameter values of the plurality of objects are not obvious. In other words, the scenario is a scenario in which an object that is performing lane change is not included. The object that is performing lane change includes at least one of the object that cuts out of the lane in which the first vehicle is located to the lane on the left of the lane in which the first vehicle is located, the object that cuts out of the lane in which the first vehicle is located to the lane on the right of the lane in which the first vehicle is located, the object that cuts in the lane in which the first vehicle is located from the lane on the left of the lane in which the first vehicle is located, and the object that cuts in the lane in which the first vehicle is located from the lane on the right of the lane in which the first vehicle is located. For example, in a current traveling scenario of the first vehicle, a static object and another vehicle that is traveling in the current lane are included.

For the foregoing design, the following method may be used to select at least one key object from the plurality of objects.

Target parameter values respectively corresponding to the plurality of objects are calculated. A target parameter value corresponding to each object is determined based on a first function value and a second function value. The first function value is determined based on the longitudinal distance between the object and the first vehicle and the longitudinal maximum distance. For example, a larger longitudinal distance between the object and the first vehicle indicates a smaller first function value. The second function value is determined based on the status parameter value of the object. For example, a larger status parameter value of the object indicates a larger second function value. For example, different weights are separately configured for the first function value and the second function value, and then a weighted sum is calculated and used as the target parameter value corresponding to the object. Further, after the target parameter values respectively corresponding to the plurality of objects are calculated, the at least one key object is determined from the plurality of objects based on the target parameter values respectively corresponding to the plurality of objects. For example, the target parameter values are sorted, and objects corresponding to top three target parameter values with largest target parameter values are selected as the key objects, or an object whose target parameter value is greater than a preset threshold is used as the key object.

For example, the key object may be selected by using the following method:

$$f_{obj} = w_1 \cdot f(d_x) + w_2 \cdot g(p)$$

p represents the status parameter value of the object, and $f_{obj}$ is a function used to select the key object. The function specifically includes a first function $f(d_x)$ and a second function $g(p)$. The first function is a function using the longitudinal distance between the target and the first vehicle as an independent variable, and the second function is a function using the status parameter value of the object as an independent variable. $w_1$ and $w_2$ are weights of $f(d_x)$ and $g(p)$ respectively. In particular, when $w_1$ is 0, the key object is selected only based on g(p).

It may be understood that, larger $d_x$ indicates smaller $f(d_x)$, and $f(d_x)$ may use but is not limited to the following functions:

$$f(d_x) = \left(1 - \frac{d_x}{x_{max}}\right) \times 100\%$$

$d_x$ is the longitudinal distance between the object and the first vehicle, and $x_{max}$ is the longitudinal maximum distance corresponding to the first vehicle.

It may be understood that, g(p) is positively correlated with overlap, and g(p) may use but is not limited to the following function:

$$g(p) = p$$

Further, $f_{obj}$ corresponding to each of the plurality of objects may be calculated by using the foregoing formula, and an object corresponding to a maximum value of $f_{obj}$ is used as the key object.

In another possible design, the at least one key object is selected from the plurality of objects based on the status parameter values of the plurality of objects, a longitudinal distance between each of the plurality of objects and the first vehicle, a motion status of at least one object in the plurality of objects, and a lane in which the at least one object is located.

The motion status of the at least one object is a motion status of the object that is performing lane change.

The foregoing design is mainly applicable to a scenario in which there is an object with a relatively obvious change trend of the status parameter value. In other words, the scenario is a scenario in which the object that is performing lane change is included. The object that is performing lane change includes at least one of the object that cuts out of the lane in which the first vehicle is located to the lane on the left of the lane in which the first vehicle is located, the object that cuts out of the lane in which the first vehicle is located to the lane on the right of the lane in which the first vehicle is located, the object that cuts in the lane in which the first vehicle is located from the lane on the left of the lane in which the first vehicle is located, and the object that cuts in the lane in which the first vehicle is located from the lane on the right of the lane in which the first vehicle is located. For example, in the current traveling scenario of the first vehicle, a static object, another vehicle traveling in the current lane, and a vehicle that cuts in the lane in which the first vehicle is located from the lane on the left of the lane in which the first vehicle is located are included.

For the foregoing design, the following method may be used to select at least one key object from the plurality of objects.

Specifically, $f_{obj}$ corresponding to each object may be calculated with reference to the foregoing method, and the at least one key object is further selected from the plurality of objects with reference to the motion status of the object that is performing lane change and a lane in which the object that is performing lane change is located.

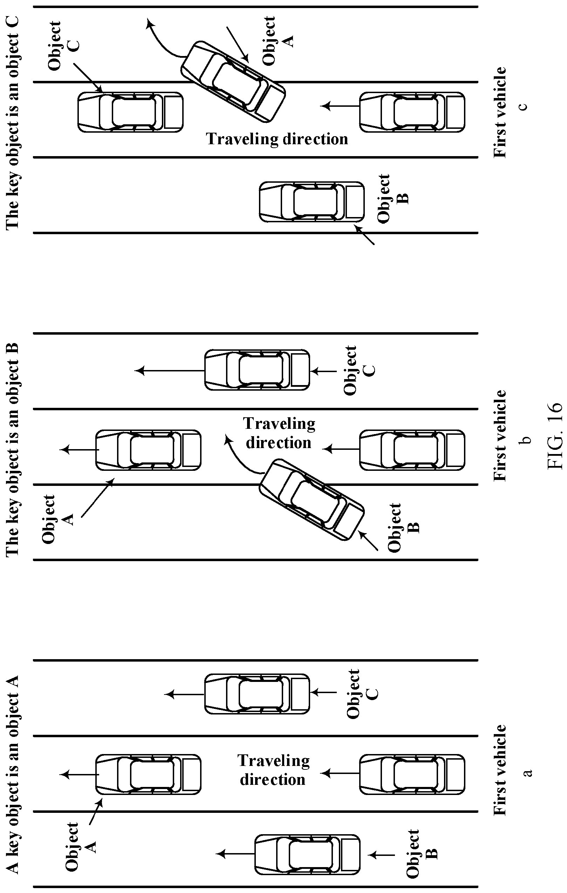

For example, as shown in FIG. 16, in a scenario a, if an object A travels in the current lane, an object B travels in the left lane, an object C travels in the right lane, and the object B and the object C have no trend to switch between lanes (that is, p is 0), the object A is the key object. The scenario a does not include the object that is performing lane change. In a scenario b, an object B is cutting in the current lane (which may be determined based on a change trend of p over time), and a longitudinal distance between the object B and the first vehicle is relatively small. Therefore, the object B is the key object. In a scenario c, although a longitudinal distance between the object A and the first vehicle is relatively small, the object A is cutting in the right lane (which may be determined based on a change trend of p over time). Therefore, the object C is the key object.

It should be understood that the key object may be further selected with reference to another factor as a reference variable, for example, a current road condition, a weather condition, or a speed of the first vehicle. This is merely an example, and is not intended to limit this application.

Further, the first vehicle may display information about the key object through a human machine interface, or play the information about the key object by using a voice, to remind the driver to pay attention, to provide a reference for the driver to perform a correct control action on the first vehicle. The first vehicle may further notify the intelligent driving function unit shown in FIG. 1 of the determined key object, so that the intelligent driving function unit performs a correct control action on the first vehicle, for example, braking or deceleration.

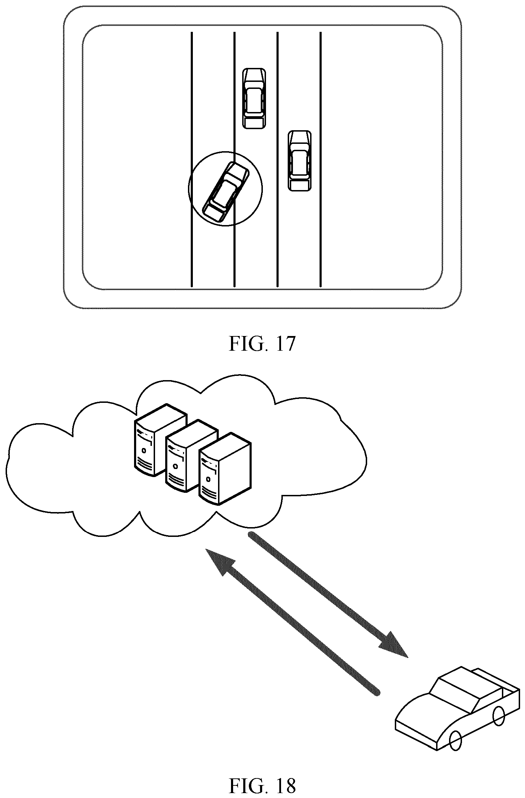

For example, FIG. 17 is a schematic diagram of an example of displaying a key object on a human machine interface. The key object is marked by a circle, and the first vehicle is not included in FIG. 17. FIG. 17 shows vehicles in a traveling direction of the first vehicle.

In addition, this application further provides an intelligent driving system. The system includes a vehicle end and a cloud server end. The vehicle end is located in a first vehicle. It may be understood that the cloud server end herein may be a physical server, or may be a virtual machine. This is not limited in this application. Step 310 to step 350 may be completed in the cloud server end, or some steps in step 310 to step 350 may be completed in the cloud server end. To be specific, the vehicle end in the first vehicle may complete some steps of the foregoing method, and the cloud server end completes other steps of the foregoing method. FIG. 18 is a schematic diagram of interaction between a vehicle end and a cloud server end.

It may be understood that in embodiments of this application, the first vehicle may perform some or all of steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily to be performed.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In the foregoing embodiments of this application, to implement the foregoing functions, the intelligent driving system includes a corresponding hardware structure and/or software module for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application.

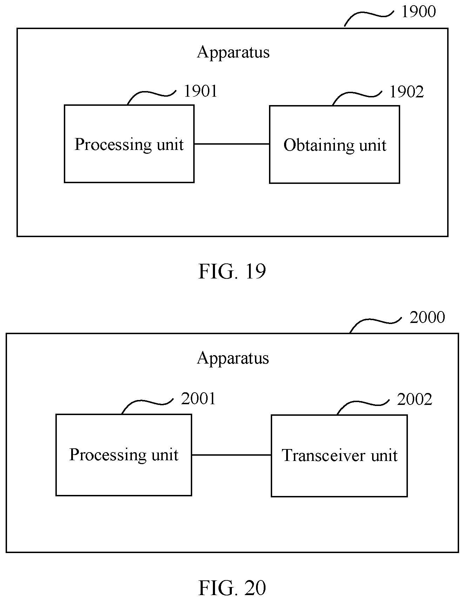

Same as the foregoing concept, as shown in FIG. 19, an embodiment of this application further provides an apparatus 1900. The apparatus 1900 includes an obtaining unit 1902 and a processing unit 1901.

The apparatus 1900 is configured to implement functions of the first vehicle in the foregoing method. The apparatus may be the first vehicle or an intelligent driving system in the first vehicle.

The obtaining unit 1902 is configured to obtain lane line detection information, motion posture information of a first vehicle, and detection information of a plurality of objects.

The processing unit 1901 is configured to: determine a lane area based on the lane line detection information; determine a track area of the first vehicle based on the motion posture information of the first vehicle; determine a passing area of the first vehicle based on the lane area, the track area of the first vehicle, and a traveling status of the first vehicle; determine status parameter values of the plurality of objects based on the passing area of the first vehicle and the detection information of the plurality of objects, where the status parameter value of each object is used to indicate a degree of overlapping between the object and the passing area of the first vehicle; and select at least one key object from the plurality of objects based on at least the status parameter values of the plurality of objects.

For specific execution processes of the processing unit 1901 and the obtaining unit 1902, refer to records in the foregoing method embodiments. Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software function module.

As another optional variation, the apparatus may be a chip system. In this embodiment of this application, the chip system may include a chip, or may include a chip and another discrete component. For example, the apparatus includes a processor and an interface, and the interface may be an input/output interface. The processor implements functions of the processing unit 1901, and the interface implements functions of the obtaining unit 1902. The apparatus may further include a memory. The memory is configured to store a program that may be run on the processor, and the processor implements the methods in the foregoing embodiments when executing the program.

Same as the foregoing concept, as shown in FIG. 20, an embodiment of this application further provides an apparatus 2000. The apparatus 2000 includes a transceiver unit 2002 and a processing unit 2001.

The apparatus 2000 is configured to implement functions of the first vehicle in the foregoing method. The apparatus may be a cloud server end.

The transceiver unit 2002 is configured to receive lane line detection information from a first vehicle, motion posture information of the first vehicle, and detection information of a plurality of objects.

The processing unit 2001 is configured to: determine a lane area based on the lane line detection information; determine a track area of the first vehicle based on the motion posture information of the first vehicle; determine a passing area of the first vehicle based on the lane area, the track area of the first vehicle, and a traveling status of the first vehicle; determine status parameter values of the plurality of objects based on the passing area of the first vehicle and the detection information of the plurality of objects, where the status parameter value of each object is used to indicate a degree of overlapping between the object and the passing area of the first vehicle; and select at least one key object from the plurality of objects based on at least the status parameter values of the plurality of objects.

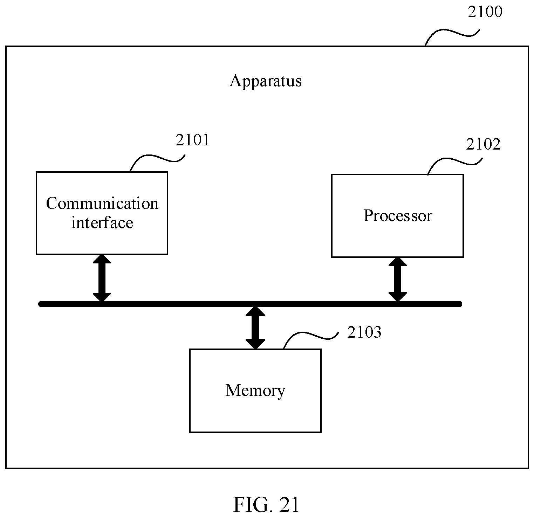

Same as the foregoing idea, as shown in FIG. 21, an embodiment of this application further provides an apparatus 2100. The apparatus 2100 includes a communication interface 2101, at least one processor 2102, and at least one memory 2103. The communication interface 2101 is configured to communicate with another device via a transmission medium, so that an apparatus in the apparatus 2100 can communicate with the another device. The memory 2103 is configured to store a computer program. The processor 2102 invokes the computer program stored in the memory 2103, to send and receive data through the communication interface 2101, to perform the method according to any one of the foregoing embodiments.

For example, when the apparatus is a first vehicle, the memory 2103 is configured to store the computer program. The processor 2102 invokes the computer program stored in the memory 2103, to perform, through the communication interface 2101, the methods performed by the first vehicle in the foregoing embodiments.

In this embodiment of this application, the communication interface 2101 may be a transceiver, a circuit, a bus, a module, or a communication interface of another type. The processor 2102 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module. The memory 2103 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function. The memory 2103 is coupled to the processor 2102. Coupling in this embodiment of this application is indirect coupling or a communication connection between apparatuses, units, or modules, may be in an electrical form, a mechanical form, or another form, and is used for information exchange between apparatuses, units, or modules. In another implementation, the memory 2103 may alternatively be located outside the apparatus 2100. The processor 2102 may cooperate with the memory 2103. The processor 2102 may execute program instructions stored in the memory 2103. At least one of the at least one memory 2103 may alternatively be included in the processor 2102. In this embodiment of this application, a connection medium among the communication interface 2101, the processor 2102, and the memory 2103 is not limited. For example, in this embodiment of this application, the memory 2103, the processor 2102, and the communication interface 2101 may be connected through a bus in FIG. 21. The bus may be classified into an address bus, a data bus, a control bus, or the like.

It may be understood that the apparatus in the embodiment shown in FIG. 19 may be implemented by the apparatus 2100 shown in FIG. 21. Specifically, the processing unit 1901 may be implemented by the processor 2102, and the obtaining unit 1902 may be implemented by the communication interface 2101.

The apparatus in the embodiment shown in FIG. 20 may be implemented by the apparatus 2100 shown in FIG. 21. Specifically, the processing unit 2001 may be implemented by the processor 2102, and the obtaining unit 2002 may be implemented by the communication interface 2101.

An embodiment of this application further provides a readable storage medium. The readable storage medium stores a computer program. When the computer program is run on a device, the device is enabled to perform the method according to any one of the foregoing embodiments.

All or some of the methods in embodiments of this application may be implemented through software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (Solid State Disk, SSD)), or the like.

The foregoing embodiments are merely used to describe the technical solutions of this application in detail. The descriptions of the foregoing embodiments are merely intended to help understand the method according to any one of the foregoing embodiments of the present invention, and shall not be construed as any limitation on embodiments of the present invention. Variations or replacements readily figured out by a person skilled in the art shall fall within the protection scope of embodiments of the present invention.

**Claims**

1. A key object selection method, wherein the method comprises:

   obtaining (300) lane line detection information, motion posture information of a first vehicle, and detection information of a plurality of objects;
   determining (310) a lane area based on the lane line detection information, and determining (320) a track area of the first vehicle based on the motion posture information of the first vehicle;
   determining (330) a passing area of the first vehicle based on the lane area, the track area of the first vehicle, and a traveling status of the first vehicle;
   determining (340) status parameter values of the plurality of objects based on the passing area of the first vehicle and the detection information of the plurality of objects, wherein the status parameter value of each object is used to indicate a degree of overlapping between the object and the passing area of the first vehicle; and
   selecting (350) at least one key object from the plurality of objects based on at least the status parameter values of the plurality of objects.

2. The method according to claim 1, wherein the lane area comprises an area of a lane in which the first vehicle is located and an area other than the lane in which the first vehicle is located, and the area other than the lane in which the first vehicle is located comprises at least one of an area of a lane on the left of the lane in which the first vehicle is located or an area of a lane on the right of the lane in which the first vehicle is located.

3. The method according to claim 2, further comprising: re-determining the lane area when at least one of a plurality of the following events is determined based on the lane line detection information, wherein the plurality of events comprise: a distance between a left lane line and a right lane line does not meet a first preset condition, a distance between the left lane line and the first vehicle does not meet a second preset condition, and a distance between the right lane line and the first vehicle does not meet the second preset condition.

4. The method according to any one of claims 1 to 3, wherein the traveling status of the first vehicle comprises one or more of the following: the first vehicle travels in an area without a lane line, the first vehicle travels in the lane in which the first vehicle is located, the first vehicle travels on the lane line, the first vehicle performs lane change but does not cross the lane line, and the first vehicle performs lane change and crosses the lane line.

5. The method according to claim 4, further comprising:

   when the first vehicle remains in a first status or a second status for more than first preset duration, determining that the first vehicle has the traveling status in which the first vehicle travels on the lane line, wherein
   in the first status, an included angle between a head center line of the first vehicle and a left lane line is less than a first preset threshold, and a vertical distance from a head center point of the first vehicle to the left lane line is less than a second preset threshold; and in the second status, an included angle between the head center line of the first vehicle and a right lane line is less than the first preset threshold, and a vertical distance from the head center point of the first vehicle to the right lane line is less than the second preset threshold.

6. The method according to claim 4, further comprising:

   when the first vehicle remains in a third status or a fourth status for more than second preset duration, determining that the first vehicle has the traveling status in which the first vehicle performs lane change but does not cross the lane line, wherein
   in the third status, an included angle between a head center line of the first vehicle and a left lane line is greater than a third preset threshold, a vertical distance from a head center point of the first vehicle to the left lane line decreases and is greater than 0, and a vertical distance from the head center point of the first vehicle to a right lane line increases and is less than a preset lane width; and in the fourth status, an included angle between the head center line of the first vehicle and the right lane line is greater than the third preset threshold, a vertical distance from the head center point of the first vehicle to the right lane line decreases and is greater than 0, and a vertical distance from the head center point of the first vehicle to the left lane line increases and is less than the preset lane width.

7. The method according to claim 4, further comprising:

in a lane line detection periodicity, when a vertical distance from a head center point of the first vehicle to a left lane line suddenly changes from a preset lane width to 0, and a vertical distance from the head center point of the first vehicle to a right lane line suddenly changes from 0 to the preset lane width, determining that the first vehicle has the traveling status in which the first vehicle performs lane change and crosses the lane line; or

in a lane line detection periodicity, when a vertical distance from a head center point of the first vehicle to a left lane line suddenly changes from 0 to a preset lane width, and a vertical distance from the head center point of the first vehicle to a right lane line suddenly changes from the preset lane width to 0, determining that the first vehicle has the traveling status in which the first vehicle performs lane change and crosses the lane line.

8. The method according to any one of claims 1 to 7, wherein the determining (320) a track area of the first vehicle based on the motion posture information of the first vehicle comprises:

determining a moving track of the first vehicle based on the motion posture information of the first vehicle, and determining an original track area based on the moving track of the first vehicle and a preset extension width;
determining a longitudinal maximum distance and a longitudinal cut-in distance based on the motion posture information of the first vehicle, wherein the longitudinal maximum distance indicates a range in which traveling of the first vehicle may be affected at a current moment and at a current speed of the first vehicle, and the longitudinal cut-in distance indicates a possible location at which another object vertically cuts in the lane in which the first vehicle is located; and
determining the track area of the first vehicle based on the original track area, the longitudinal maximum distance, the longitudinal cut-in distance, and an extension width corresponding to the longitudinal cut-in distance, wherein the extension width corresponding to the longitudinal cut-in distance is greater than the preset extension width; or determining the track area of the first vehicle based on the original track area, the longitudinal maximum distance, and an extension width corresponding to the longitudinal maximum distance, wherein the extension width corresponding to the longitudinal maximum distance is less than the preset extension width.

9. The method according to claim 8, wherein the determining a passing area (330) of the first vehicle based on the lane area, the track area (320) of the first vehicle, and a traveling status of the first vehicle comprises:

when the first vehicle has the traveling status in which the first vehicle travels in the area without the lane line, determining that the passing area of the first vehicle is the track area of the first vehicle, and a longitudinal length of the passing area of the first vehicle is determined based on the longitudinal maximum distance;
when the first vehicle has the traveling status in which the first vehicle travels in the lane in which the first vehicle is located, determining that the passing area of the first vehicle is the area of the lane in which the first lane is located, and a longitudinal length of the passing area of the first vehicle is determined based on the longitudinal maximum distance;
when the first vehicle has the traveling status in which the first vehicle travels on the lane line, determining that the passing area of the first vehicle is determined based on the area of the lane in which the first vehicle is located and the track area of the first vehicle, and a longitudinal length of the passing area of the first vehicle is determined based on the longitudinal maximum distance;
when the first vehicle has the traveling status in which the first vehicle performs lane change but does not cross the lane line, determining that the passing area of the first vehicle is an area of a target lane obtained after lane change of the first vehicle, and a longitudinal length of the passing area of the first vehicle is determined based on the longitudinal maximum distance; or
when the first vehicle has the traveling status in which the first vehicle performs lane change and crosses the lane line, determining that the passing area of the first vehicle is the area of the lane in which the first vehicle is located, and a longitudinal length of the passing area of the first vehicle is determined based on the longitudinal maximum distance.

10. The method according to claim 9, wherein the determining (340) status parameter values of the plurality of objects based on the passing area of the first vehicle and the detection information of the plurality of objects comprises:

when it is determined, based on detection information of one object in the detection information of the plurality of objects, that the object is located on the left of the first vehicle, determining a vertical distance between a center point of the object and a left boundary of the passing area of the first vehicle based on the passing area of the first vehicle and the detection information of the object; and determining the status parameter value of the object based on the vertical distance between the center point of the object and the left boundary of the passing area of the first vehicle, a distance between the center point of the object and the head center line of the first vehicle, and a width of the object; when it is determined, based on detection information of one object in the detection information of the plurality of objects, that the object is located on the right of the first vehicle, determining a vertical distance between a center point of the object and a right boundary of the passing area of the first vehicle based on the passing area of the first vehicle and the detection information of the object; and determining the status parameter value of the object based on the vertical distance between the center point of the object and the right boundary of the passing area of the first vehicle, a distance between the center point of the object and the head center line of the first vehicle, and a width of the object; or

when it is determined, based on detection information of one object in the detection information of the plurality of objects, that a center point of the object falls on the head center line of the first vehicle, determining a vertical distance between the center point of the object and a right boundary of the passing area of the first vehicle based on the passing area of the first vehicle and the detection information of the object; and determining the status parameter value of the object based on the vertical distance between the center point of the object and the right boundary of the passing area of the first vehicle, and a width of the object.

11. The method according to claim 10, further comprising:

monitoring a change trend of the status parameter value of the object; and
when it is determined that the change trend of the status parameter value of the object meets a preset condition, determining a motion status of the object and a lane in which the object is located.

12. The method according to claim 11, wherein the selecting at least one key object from the plurality of objects based on at least the status parameter values of the plurality of objects comprises:
selecting the at least one key object from the plurality of objects based on the status parameter values of the plurality of objects, a longitudinal distance between each of the plurality of objects and the first vehicle, a motion status of at least one object in the plurality of objects, and a lane in which the at least one object is located.

13. The method according to any one of claims 1 to 12, further comprising:

displaying information about the at least one key object on a human machine interface of the first vehicle; or
prompting a driver with the information about the at least one key object by using a voice.

14. An apparatus (1900) for selecting a key object, wherein the apparatus comprises:

an obtaining unit (1902), configured to obtain lane line detection information, motion posture information of a first vehicle, and detection information of a plurality of objects; and
a processing unit (1901), configured to: determine a lane area based on the lane line detection information; determine a track area of the first vehicle based on the motion posture information of the first vehicle; determine a passing area of the first vehicle based on the lane area, the track area of the first vehicle, and a traveling status of the first vehicle; determine status parameter values of the plurality of objects based on the passing area of the first vehicle and the detection information of the plurality of objects, wherein the status parameter value of each object is used to indicate a degree of overlapping between the object and the passing area of the first vehicle; and select at least one key object from the plurality of objects based on at least the status parameter values of the plurality of objects.

15. A computer-readable storage medium, wherein the computer-readable storage medium comprises program instructions, and when the program instructions are run on a device, the device is enabled to perform the method according to any one of claims 1 to 13.

**Patentansprüche**

1. Schlüsselobjekt-Auswahlverfahren, wobei das Verfahren Folgendes umfasst:

Erlangen (300) von Fahrbahnlinienerkennungsinformationen, Bewegungspositionsinformationen eines ersten Fahrzeugs und Erkennungsinformationen einer Vielzahl von Objekten;
Bestimmen (310) eines Fahrbahnbereichs auf Grundlage der Fahrbahnlinienerkennungsinformationen und Bestimmen (320) eines Streckenbereichs des ersten Fahrzeugs auf Grundlage der Bewegungspositionsinformationen des ersten Fahrzeugs;

Bestimmen (330) eines Überholbereichs des ersten Fahrzeugs auf Grundlage des Fahrbahnbereichs, des Streckenbereichs des ersten Fahrzeugs und einem Fahrtstatus des ersten Fahrzeugs;

Bestimmen (340) von Statusparameterwerten der Vielzahl von Objekten auf Grundlage des Überholbereichs des ersten Fahrzeugs und der Erkennungsinformationen der Vielzahl von Objekten, wobei der Statusparameterwert jedes Objekts verwendet wird, um einen Überlappungsgrad zwischen dem Objekt und dem Überholbereich des ersten Fahrzeugs anzugeben; und

Auswählen (350) von mindestens einem Schlüsselobjekt aus der Vielzahl von Objekten auf Grundlage von mindestens den Statusparameterwerten der Vielzahl von Objekten.

2. Verfahren nach Anspruch 1, wobei der Fahrbahnbereich einen Bereich einer Fahrbahn, in der sich das erste Fahrzeug befindet, und einen anderen Bereich als die Fahrbahn, in der sich das erste Fahrzeug befindet, umfasst, und der andere Bereich als die Fahrbahn, in der sich das erste Fahrzeug befindet, mindestens einen Bereich einer Fahrbahn links von der Fahrbahn, in der sich das erste Fahrzeug befindet, und einen Bereich einer Fahrbahn rechts von der Fahrbahn, in der sich das erste Fahrzeug befindet, umfasst.

3. Verfahren nach Anspruch 2, ferner umfassend:
Neubestimmen des Fahrbahnbereichs, wenn mindestens eines einer Vielzahl der folgenden Ereignisse auf Grundlage der Fahrbahnlinienerkennungsinformationen bestimmt wird, wobei die Vielzahl von Ereignissen Folgendes umfasst: ein Abstand zwischen einer linken Fahrbahnlinie und einer rechten Fahrbahnlinie erfüllt nicht eine erste vorgegebene Bedingung, ein Abstand zwischen der linken Fahrbahnlinie und dem ersten Fahrzeug erfüllt nicht eine zweite vorgegebene Bedingung und ein Abstand zwischen der rechten Fahrbahnlinie und dem ersten Fahrzeug erfüllt nicht die zweite vorgegebene Bedingung.

4. Verfahren nach einem der Ansprüche 1 bis 3, wobei der Fahrstatus des ersten Fahrzeugs eines oder mehrere von Folgendem umfasst: das erste Fahrzeug fährt in einem Bereich ohne Fahrbahnlinie, das erste Fahrzeug fährt auf der Fahrbahn, auf der sich das erste Fahrzeug befindet, das erste Fahrzeug fährt auf der Fahrbahnlinie, das erste Fahrzeug führt einen Fahrbahnwechsel durch, überquert die Fahrbahnlinie jedoch nicht, und das erste Fahrzeug führt einen Fahrbahnwechsel durch und überquert die Fahrbahnlinie.

5. Verfahren nach Anspruch 4, ferner Folgendes umfassend:

wenn das erste Fahrzeug länger als die erste vorgegebene Dauer in einem ersten Status oder einem zweiten Status verbleibt, Bestimmen, dass das erste Fahrzeug den Fahrstatus hat, in dem das erste Fahrzeug auf der Fahrbahnlinie fährt, wobei
im ersten Status ein eingeschlossener Winkel zwischen einer Kopfmittellinie des ersten Fahrzeugs und einer linken Fahrbahnlinie kleiner als ein erster vorgegebener Schwellenwert und ein vertikaler Abstand von einem Kopfmittelpunkt des ersten Fahrzeugs zu der linken Fahrbahnlinie kleiner als ein zweiter vorgegebener Schwellenwert ist; und im zweiten Status ein eingeschlossener Winkel zwischen der Kopfmittellinie des ersten Fahrzeugs und einer rechten Fahrbahnlinie kleiner als der erste vorgegebene Schwellenwert und ein vertikaler Abstand von dem Kopfmittelpunkt des ersten Fahrzeugs zu der rechten Fahrbahnlinie kleiner als der zweite vorgegebene Schwellenwert ist.

6. Verfahren nach Anspruch 4, ferner Folgendes umfassend:

wenn das erste Fahrzeug länger als eine zweite vorgegebene Dauer in einem dritten Status oder einem vierten Status verbleibt, Bestimmen, dass das erste Fahrzeug den Fahrstatus hat, in dem das erste Fahrzeug einen Fahrbahnwechsel durchführt, aber die Fahrbahnlinie nicht überquert, wobei
im dritten Status ein eingeschlossener Winkel zwischen einer Kopfmittellinie des ersten Fahrzeugs und einer linken Fahrbahnlinie größer als ein dritter vorgegebener Schwellenwert ist, ein vertikaler Abstand von einem Kopfmittelpunkt des ersten Fahrzeugs zu der linken Fahrbahnlinie abnimmt und größer als 0 ist, und ein vertikaler Abstand von dem Kopfmittelpunkt des ersten Fahrzeugs zu einer rechten Fahrbahnlinie zunimmt und kleiner als eine vorgegebene Fahrbahnbreite ist; und im vierten Status ein eingeschlossener Winkel zwischen der Kopfmittellinie des ersten Fahrzeugs und der rechten Fahrbahnlinie größer als der dritte vorgegebene Schwellenwert ist, ein vertikaler Abstand von dem Kopfmittelpunkt des ersten Fahrzeugs zu der rechten Fahrbahnlinie abnimmt und größer als 0 ist, und ein vertikaler Abstand von dem Kopfmittelpunkt des ersten Fahrzeugs zu der linken Fahrbahnlinie zunimmt und kleiner als die voreingestellte Fahrbahnbreite ist.

7. Verfahren nach Anspruch 4, ferner Folgendes umfassend:

in einer Fahrbahnlinienerkennungsperiodizität, wenn sich ein vertikaler Abstand von einem Kopfmittelpunkt des ersten Fahrzeugs zu einer linken Fahrbahnlinie plötzlich von einer vorgegebenen Fahrbahnbreite auf 0 ändert und sich ein vertikaler Abstand von dem Kopfmittelpunkt des ersten Fahrzeugs zu einer rechten Fahrbahnlinie plötzlich von 0 auf die vorgegebene Fahrbahnbreite ändert, Bestimmen, dass sich das erste Fahrzeug in dem Fahrstatus befindet, in dem das erste Fahrzeug einen Fahrbahnwechsel durchführt und die Fahrbahnlinie überquert; oder
in einer Fahrbahnlinienerkennungsperiodizität, wenn sich ein vertikaler Abstand von einem Kopfmittelpunkt des ersten Fahrzeugs zu einer linken Fahrbahnlinie plötzlich von 0 auf eine vorgegebene Fahrbahnbreite ändert und sich ein vertikaler Abstand von dem Kopfmittelpunkt des ersten Fahrzeugs zu einer rechten Fahrbahnlinie plötzlich von der vorgegebenen Fahrbahnbreite auf 0 ändert, Bestimmen, dass sich das erste Fahrzeug in dem Fahrstatus befindet, in dem das erste Fahrzeug einen Fahrbahnwechsel durchführt und die Fahrbahnlinie überquert.

8. Verfahren nach einem der Ansprüche 1 bis 7, wobei das Bestimmen (320) eines Streckenbereichs des ersten Fahrzeugs auf Grundlage der Bewegungspositionsinformationen des ersten Fahrzeugs Folgendes umfasst:

Bestimmen einer Fahrbahn des ersten Fahrzeugs auf Grundlage der Bewegungspositionsinformationen des ersten Fahrzeugs und Bestimmen eines ursprünglichen Streckenbereichs auf Grundlage der Fahrbahn des ersten Fahrzeugs und einer vorgegebenen Erweiterungsbreite;
Bestimmen einer maximalen Längsdistanz und einer längsseitigen Einscherdistanz auf Grundlage der Bewegungspositionsinformationen des ersten Fahrzeugs, wobei die maximale Längsdistanz einen Bereich angibt, in dem die Fahrt des ersten Fahrzeugs zu einem aktuellen Zeitpunkt und bei einer aktuellen Geschwindigkeit des ersten Fahrzeugs beeinträchtigt werden kann, und die längsseitige Einscherdistanz eine mögliche Stelle angibt, an der ein anderes Objekt vertikal in die Fahrbahn einschert, in der sich das erste Fahrzeug befindet; und Bestimmen der Streckenfläche des ersten Fahrzeugs auf Grundlage des ursprünglichen Streckenbereichs, der maximalen Längsdistanz, der längsseitigen Einscherdistanz und einer Erweiterungsbreite, die der längsseitigen Einscherdistanz entspricht, wobei die Erweiterungsbreite, die der längsseitigen Einscherdistanz entspricht, größer ist als die voreingestellte Erweiterungsbreite; oder Bestimmen des Streckenbereichs des ersten Fahrzeugs auf Grundlage des ursprünglichen Streckenbereichs, der maximalen Längsdistanz und einer Erweiterungsbreite, die der maximalen Längsdistanz entspricht, wobei die Erweiterungsbreite, die der maximalen Längsdistanz entspricht, kleiner als die vorgegebene Erweiterungsbreite ist.

9. Verfahren nach Anspruch 8, wobei das Bestimmen eines Überholbereichs (330) des ersten Fahrzeugs auf Grundlage des Fahrbahnbereichs, des Streckenbereichs (320) des ersten Fahrzeugs und eines Fahrstatus des ersten Fahrzeugs Folgendes umfasst:

wenn das erste Fahrzeug den Fahrstatus hat, in dem das erste Fahrzeug in dem Bereich ohne Fahrbahnlinie fährt, Bestimmen, dass der Überholbereich des ersten Fahrzeugs der Streckenbereich des ersten Fahrzeugs ist, und eine Längslänge des Überholbereichs des ersten Fahrzeugs auf Grundlage der maximalen Längsdistanz bestimmt wird;
wenn das erste Fahrzeug den Fahrstatus hat, in dem das erste Fahrzeug auf der Fahrbahn fährt, auf der sich das erste Fahrzeug sich befindet, Bestimmen, dass der Überholbereich des ersten Fahrzeugs der Bereich der Fahrbahn ist, auf der sich die erste Fahrbahn befindet, und eine Längslänge des Überholbereichs des ersten Fahrzeugs auf Grundlage der maximalen Längsdistanz bestimmt wird;
wenn das erste Fahrzeug den Fahrstatus hat, in dem das erste Fahrzeug auf der Fahrbahnlinie fährt, Bestimmen, dass der Überholbereich des ersten Fahrzeugs auf Grundlage des Bereichs der Fahrbahn, auf dem sich das erste Fahrzeug befindet, und des Streckenbereichs des ersten Fahrzeugs bestimmt wird, und eine Längslänge des Überholbereichs des ersten Fahrzeugs auf Grundlage der maximalen Längsdistanz bestimmt wird;
wenn das erste Fahrzeug den Fahrstatus hat, in dem das erste Fahrzeug einen Fahrbahnwechsel durchführt, aber die Fahrbahnlinie nicht überquert, Bestimmen, dass der Überholbereich des ersten Fahrzeugs ein Bereich einer Zielfahrbahn ist, der nach dem Fahrbahnwechsel des ersten Fahrzeugs erlangt wurde, und eine Längslänge des Überholbereichs des ersten Fahrzeugs auf Grundlage der maximalen Längsdistanz bestimmt wird; oder

wenn das erste Fahrzeug den Fahrstatus hat, in dem das erste Fahrzeug einen Fahrbahnwechsel durchführt und die Fahrbahnlinie überquert, Bestimmen, dass der Überholbereich des ersten Fahrzeugs der Bereich der Fahrbahn ist, in dem sich das erste Fahrzeug befindet, und eine Längslänge des Überholbereichs des ersten Fahrzeugs auf Grundlage der maximalen Längsdistanz bestimmt wird.

10. Verfahren nach Anspruch 9, wobei das Bestimmen (340) von Statusparameterwerten der Vielzahl von Objekten auf Grundlage des Überholbereichs des ersten Fahrzeugs und der Erkennungsinformationen der Vielzahl von Objekten Folgendes umfasst:

wenn auf Grundlage der Erkennungsinformationen eines Objekts in den Erkennungsinformationen der Vielzahl von Objekten bestimmt wird, dass sich das Objekt links vom ersten Fahrzeug befindet, Bestimmen eines vertikalen Abstands zwischen einem Mittelpunkt des Objekts und einer linken Grenze des Überholbereichs des ersten Fahrzeugs auf Grundlage des Überholbereichs des ersten Fahrzeugs und der Erkennungsinformationen des Objekts; und Bestimmen des Statusparameterwerts des Objekts auf Grundlage des vertikalen Abstands zwischen dem Mittelpunkt des Objekts und der linken Grenze des Überholbereichs des ersten Fahrzeugs, einem Abstand zwischen dem Mittelpunkt des Objekts und der Kopfmittellinie des ersten Fahrzeugs und einer Breite des Objekts;

wenn auf Grundlage von Erkennungsinformationen eines Objekts in den Erkennungsinformationen der Vielzahl von Objekten bestimmt wird, dass sich das Objekt rechten vom ersten Fahrzeug befindet, Bestimmen eines vertikalen Abstands zwischen einem Mittelpunkt des Objekts und einer rechten Grenze des Überholbereichs des ersten Fahrzeugs auf Grundlage des Überholbereichs des ersten Fahrzeugs und der Erkennungsinformationen des Objekts; und Bestimmen des Statusparameterwerts des Objekts auf Grundlage des vertikalen Abstands zwischen dem Mittelpunkt des Objekts und der rechten Grenze des Überholbereichs des ersten Fahrzeugs, einem Abstand zwischen dem Mittelpunkt des Objekts und der Kopfmittellinie des ersten Fahrzeugs und einer Breite des Objekts;

wenn auf Grundlage von Erkennungsinformationen eines Objekts in den Erkennungsinformationen der Vielzahl von Objekten bestimmt wird, dass ein Mittelpunkt des Objekts auf der Kopfmittellinie des ersten Fahrzeugs liegt, Bestimmen eines vertikalen Abstands zwischen dem Mittelpunkt des Objekts und einer rechten Grenze des Überholbereichs des ersten Fahrzeugs auf Grundlage des Überholbereichs des ersten Fahrzeugs und der Erkennungsinformationen des Objekts; und Bestimmen des Statusparameterwerts des Objekts auf Grundlage des vertikalen Abstands zwischen dem Mittelpunkt des Objekts und der rechten Grenze des Überholbereichs des ersten Fahrzeugs und einer Breite des Objekts.

11. Verfahren nach Anspruch 10, ferner umfassend:

Überwachen eines Änderungstrends des Statusparameterwerts des Objekts; und wenn bestimmt wird, dass die Änderungstendenz des Statusparameterwerts des Objekts eine vorgegebene Bedingung erfüllt, Bestimmen eines Bewegungsstatus des Objekts und einer Fahrbahn, auf der sich das Objekt befindet.

12. Verfahren nach Anspruch 11, wobei das Auswählen von mindestens einem Schlüsselobjekt aus der Vielzahl von Objekten auf Grundlage von mindestens den Statusparameterwerten der Vielzahl von Objekten Folgendes umfasst:
Auswählen des mindestens einen Schlüsselobjekts aus der Vielzahl von Objekten auf Grundlage der Statusparameterwerte der Vielzahl von Objekten, eines Längsabstands zwischen jedem der Vielzahl von Objekten und dem ersten Fahrzeug, eines Bewegungsstatus von mindestens einem Objekt in der Vielzahl von Objekten und einer Fahrbahn, auf der sich das mindestens eine Objekt befindet.

13. Verfahren nach einem der Ansprüche 1 bis 12, ferner umfassend:

Anzeigen von Informationen über das mindestens eine Schlüsselobjekt auf einer Mensch-Maschine-Schnittstelle des ersten Fahrzeugs; oder Auffordern eines Fahrers zur Bereitstellung der Informationen über das mindestens eine Schlüsselobjekt mittels einer Stimme.

14. Vorrichtung (1900) zum Auswählen eines Schlüsselobjekts, wobei die Vorrichtung Folgendes umfasst:

eine Erlangungseinheit (1902), die dazu konfiguriert ist, Fahrbahnlinienerkennungsinformationen, Bewegungspositionsinformationen eines ersten Fahrzeugs und Erkennungsinformationen einer Vielzahl von Objekten zu erlangen; und

eine Verarbeitungseinheit (1901), die zu Folgendem konfiguriert ist: Bestimmen eines Fahrbahnbereichs auf Grundlage der Fahrbahnlinienerkennungsinformationen; Bestimmen eines Streckenbereichs des ersten Fahrzeugs auf Grundlage der Bewegungspositionsinformationen des ersten Fahrzeugs; Bestimmen eines Überholbereichs des ersten Fahrzeugs auf Grundlage des Fahrbahnbereichs, des Streckenbereichs des ersten Fahrzeugs und einem Fahrstatus des ersten Fahrzeugs; Bestimmen von Statusparameterwerten der Vielzahl von Objekten auf Grundlage des Überholbereichs des ersten Fahrzeugs und der Erkennungsinformationen der Vielzahl von Objekten, wobei der Statusparameterwert jedes Objekts verwendet wird, um einen Überlappungsgrad zwischen dem Objekt und dem Überholbereich des ersten Fahrzeugs anzugeben; und zum Auswählen von mindestens einem Schlüsselobjekt aus der Vielzahl von Objekten mindestens auf Grundlage der Statusparameterwerte der Vielzahl von Objekten.

15. Computerlesbares Speichermedium, wobei das computerlesbare Speichermedium Programmieranweisungen umfasst, und wenn die Programmieranweisungen auf einer Vorrichtung ausgeführt werden, ist die Vorrichtung in der Lage, das Verfahren nach einem der Ansprüche 1 bis 13 durchzuführen.

**Revendications**

1. Procédé de sélection d'objet clé, dans lequel le procédé comprend :

l'obtention (300) d'informations de détection de ligne de voie, d'informations de posture de mouvement d'un premier véhicule et d'informations de détection d'une pluralité d'objets ; la détermination (310) d'une zone de voie sur la base des informations de détection de ligne de voie, et la détermination (320) d'une zone de trajectoire du premier véhicule sur la base des informations de posture de mouvement du premier véhicule ; la détermination (330) d'une zone de dépassement du premier véhicule sur la base de la zone de voie, de la zone de trajectoire du premier véhicule et d'un état de déplacement du premier véhicule ; la détermination (340) de valeurs de paramètres d'état de la pluralité d'objets sur la base de la zone de passage du premier véhicule et des informations de détection de la pluralité d'objets, dans lequel la valeur de paramètre d'état de chaque objet est utilisée pour indiquer un degré de chevauchement entre l'objet et la zone de passage du premier véhicule ; et la sélection (350) d'au moins un objet clé parmi la pluralité d'objets sur la base d'au moins les valeurs de paramètre d'état de la pluralité d'objets.

2. Procédé selon la revendication 1, dans lequel la zone de voie comprend une zone d'une voie dans laquelle se trouve le premier véhicule et une zone autre que la voie dans laquelle se trouve le premier véhicule, et la zone autre que la voie dans laquelle se trouve le premier véhicule comprend au moins une zone d'une voie à gauche de la voie dans laquelle se trouve le premier véhicule ou une zone d'une voie à droite de la voie dans laquelle se trouve le premier véhicule.

3. Procédé selon la revendication 2, comprenant également :
la redétermination de la zone de voie lorsqu'au moins un événement parmi une pluralité des événements suivants est déterminé sur la base des informations de détection de ligne de voie, dans lequel la pluralité d'événements comprennent : une distance entre une ligne de voie gauche et une ligne de voie droite ne satisfait pas une première condition prédéfinie, une distance entre la ligne de voie gauche et le premier véhicule ne satisfait pas une seconde condition prédéfinie, et une distance entre la ligne de voie droite et le premier véhicule ne satisfait pas la seconde condition prédéfinie.

4. Procédé selon l'une quelconque des revendications 1 à 3, dans lequel l'état de déplacement du premier véhicule comprend un ou plusieurs des éléments suivants : le premier véhicule se déplace dans une zone sans ligne de voie, le premier véhicule se déplace dans la voie dans laquelle se trouve le premier véhicule, le premier véhicule se déplace sur la ligne de voie, le premier véhicule effectue un changement de voie mais ne traverse pas la ligne de voie, et le premier véhicule effectue un changement de voie et traverse la ligne de voie.

5. Procédé selon la revendication 4, comprenant également :

lorsque le premier véhicule reste dans un premier état ou un second état pendant plus d'une première durée prédéfinie, la détermination que le premier véhicule a l'état de déplacement dans lequel le premier véhicule se déplace sur la ligne de voie, dans lequel dans le premier état, un angle inclus entre une ligne centrale de tête du premier véhicule et une ligne de voie de gauche est inférieur à un premier seuil prédéfini, et une distance verticale d'un point central de tête du premier véhicule à la ligne de voie de gauche est inférieure à un second seuil prédéfini ; et dans le second état, un angle inclus entre la ligne centrale de tête du premier véhicule et une ligne de voie de droite est inférieur au premier seuil prédéfini, et une distance verticale entre le point central de tête du premier véhicule et la ligne de voie de droite est inférieure au second seuil prédéfini.

**6.** Procédé selon la revendication 4, comprenant également :

lorsque le premier véhicule reste dans un troisième état ou un quatrième état pendant plus d'une seconde durée prédéfinie, la détermination que le premier véhicule a l'état de déplacement dans lequel le premier véhicule effectue un changement de voie mais ne franchit pas la ligne de voie, dans lequel

dans le troisième état, un angle inclus entre une ligne centrale de tête du premier véhicule et une ligne de voie de gauche est supérieur à un troisième seuil prédéfini, une distance verticale entre un point central de tête du premier véhicule et la ligne de voie de gauche diminue et est supérieure à 0, et une distance verticale entre le point central de tête du premier véhicule et une ligne de voie de droite augmente et est inférieure à une largeur de voie prédéfinie ; et dans le quatrième état, un angle inclus entre la ligne centrale de tête du premier véhicule et la ligne de voie de droite est supérieur au troisième seuil prédéfini, une distance verticale entre le point central de tête du premier véhicule et la ligne de voie de droite diminue et est supérieure à 0, et une distance verticale entre le point central de tête du premier véhicule et la ligne de voie de gauche augmente et est inférieure à la largeur de voie prédéfinie.

**7.** Procédé selon la revendication 4, comprenant également :

dans une périodicité de détection de ligne de voie, lorsqu'une distance verticale entre un point central de tête du premier véhicule et une ligne de voie de gauche change soudainement d'une largeur de voie prédéfinie à 0, et qu'une distance verticale entre le point central de tête du premier véhicule et une ligne de voie de droite change soudainement de 0 à la largeur de voie prédéfinie, la détermination que le premier véhicule a l'état de déplacement dans lequel le premier véhicule effectue un changement de voie et traverse la ligne de voie ; ou dans une périodicité de détection de ligne de voie, lorsqu'une distance verticale entre un point central de tête du premier véhicule et une ligne de voie de gauche change soudainement de 0 à une largeur de voie prédéfinie, et qu'une distance verticale entre le point central de tête du premier véhicule et une ligne de voie de droite change soudainement de la largeur de voie prédéfinie à 0, la détermination que le premier véhicule a l'état de déplacement dans lequel le premier véhicule effectue un changement de voie et traverse la ligne de voie.

**8.** Procédé selon l'une quelconque des revendications 1 à 7, dans lequel la détermination (320) d'une zone de trajectoire du premier véhicule sur la base des informations de posture de mouvement du premier véhicule comprend :

la détermination d'une trajectoire de déplacement du premier véhicule sur la base des informations de posture de mouvement du premier véhicule, et la détermination d'une zone de trajectoire d'origine sur la base de la trajectoire de déplacement du premier véhicule et d'une largeur d'extension prédéfinie ;
la détermination d'une distance maximale longitudinale et une distance de coupure longitudinale sur la base des informations de posture de mouvement du premier véhicule, dans lequel la distance maximale longitudinale indique une plage dans laquelle le déplacement du premier véhicule peut être affecté à un moment actuel et à une vitesse actuelle du premier véhicule, et la distance de coupure longitudinale indique un emplacement possible auquel un autre objet coupe verticalement la voie dans laquelle se trouve le premier véhicule ; et
la détermination de la zone de trajectoire du premier véhicule sur la base de la zone de trajectoire d'origine, de la distance maximale longitudinale, de la distance de coupure longitudinale et d'une largeur d'extension correspondant à la distance de coupure longitudinale, dans lequel la largeur d'extension correspondant à la distance de coupure longitudinale est supérieure à la largeur d'extension prédéfinie ; ou la détermination de la zone de trajectoire du premier véhicule sur la base de la zone de trajectoire d'origine, de la distance maximale longitudinale et d'une largeur d'extension correspondant à la distance maximale longitudinale, dans lequel la largeur d'extension correspondant à la distance maximale longitudinale est inférieure à la largeur d'extension prédéfinie.

**9.** Procédé selon la revendication 8, dans lequel la détermination d'une zone de dépassement (330) du premier véhicule sur la base de la zone de voie, de la zone de trajectoire (320) du premier véhicule et d'un état de déplacement du premier véhicule comprend :

lorsque le premier véhicule a l'état de déplacement dans lequel le premier véhicule se déplace dans la zone sans la ligne de voie, la détermination que la zone de dépassement du premier véhicule est la zone de trajectoire du premier véhicule, et une longueur longitudinale de la zone de dépassement du premier véhicule est déterminée sur la base de la distance maximale longitudinale ;

lorsque le premier véhicule a l'état de déplacement dans lequel le premier véhicule se déplace dans la voie dans laquelle est situé le premier véhicule, la détermination que la zone de dépassement du premier véhicule est la zone de la voie dans laquelle la première voie est située, et une longueur longitudinale de la zone de dépassement du premier véhicule est déterminée sur la base de la distance maximale longitudinale ;

lorsque le premier véhicule a l'état de déplacement dans lequel le premier véhicule se déplace dans la ligne de voie, la détermination que la zone de dépassement du premier véhicule est déterminée sur la base de la zone de la voie dans laquelle le premier véhicule est situé et la zone de trajectoire du premier véhicule, et une longueur longitudinale de la zone de dépassement du premier véhicule est déterminée sur la base de la distance maximale longitudinale ;

lorsque le premier véhicule a un état de déplacement dans lequel le premier véhicule effectue un changement de voie mais ne franchit pas la ligne de voie, la détermination que la zone de dépassement du premier véhicule est une zone d'une voie cible obtenue après le changement de voie du premier véhicule, et une longueur longitudinale de la zone de dépassement du premier véhicule est déterminée sur la base de la distance maximale longitudinale ; ou

lorsque le premier véhicule a l'état de déplacement dans lequel le premier véhicule effectue un changement de voie et franchit la ligne de voie, la détermination que la zone de dépassement du premier véhicule est la zone de la voie dans laquelle le premier véhicule est situé, et une longueur longitudinale de la zone de dépassement du premier véhicule est déterminée sur la base de la distance maximale longitudinale.

10. Procédé selon la revendication 9, dans lequel la détermination (340) de valeurs des paramètres d'état de la pluralité d'objets sur la base de la zone de passage du premier véhicule et des informations de détection de la pluralité d'objets comprend :

lorsqu'il est déterminé, sur la base d'informations de détection d'un objet parmi les informations de détection de la pluralité d'objets, que l'objet est situé à gauche du premier véhicule, la détermination d'une distance verticale entre un point central de l'objet et une limite gauche de la zone de dépassement du premier véhicule sur la base de la zone de dépassement du premier véhicule et des informations de détection de l'objet ; et la détermination de la valeur de paramètre d'état de l'objet sur la base de la distance verticale entre le point central de l'objet et la limite gauche de la zone de dépassement du premier véhicule, d'une distance entre le point central de l'objet et la ligne centrale de tête du premier véhicule, et d'une largeur de l'objet ;

lorsqu'il est déterminé, sur la base d'informations de détection d'un objet parmi les informations de détection de la pluralité d'objets, que l'objet est situé à droite du premier véhicule, la détermination d'une distance verticale entre un point central de l'objet et une limite droite de la zone de dépassement du premier véhicule sur la base de la zone de dépassement du premier véhicule et des informations de détection de l'objet ; et la détermination des valeurs des paramètres d'état de l'objet sur la base de la distance verticale entre le point central de l'objet et la limite droite de la zone de dépassement du premier véhicule, d'une distance entre le point central de l'objet et la ligne centrale de tête du premier véhicule, et d'une largeur de l'objet ; ou

lorsqu'il est déterminé, sur la base d'informations de détection d'un objet parmi les informations de détection de la pluralité d'objets, qu'un point central de l'objet tombe sur la ligne centrale de tête du premier véhicule, la détermination d'une distance verticale entre le point central de l'objet et une limite droite de la zone de dépassement du premier véhicule sur la base de la zone de dépassement du premier véhicule et des informations de détection de l'objet ; et la détermination des valeurs des paramètres d'état de l'objet sur la base de la distance verticale entre le point central de l'objet et la limite droite de la zone de dépassement du premier véhicule, et d'une largeur de l'objet.

11. Procédé selon la revendication 10, comprenant également :

la surveillance d'une tendance de changement de la valeur de paramètre d'état de l'objet ; et lorsqu'il est déterminé que la tendance de changement de la valeur de paramètre d'état de l'objet répond à une condition prédéfinie, la détermination d'un état de mouvement de l'objet et une voie dans laquelle l'objet est situé.

**12.** Procédé selon la revendication 11, dans lequel la sélection d'au moins un objet clé parmi la pluralité d'objets sur la base d'au moins les valeurs de paramètre d'état de la pluralité d'objets comprend :
la sélection de l'au moins un objet clé parmi la pluralité d'objets sur la base des valeurs de paramètres d'état de la pluralité d'objets, d'une distance longitudinale entre chacun de la pluralité d'objets et le premier véhicule, d'un état de mouvement d'au moins un objet dans la pluralité d'objets, et d'une voie dans laquelle se trouve au moins un objet.

**13.** Procédé selon l'une quelconque des revendications 1 à 12, comprenant également :

l'affichage d'informations sur l'au moins un objet clé sur une interface homme-machine du premier véhicule ; ou
la demande au conducteur des informations sur l'au moins un objet clé en utilisant la voix.

**14.** Appareil (1900) pour sélectionner un objet clé, dans lequel l'appareil comprend :

une unité d'obtention (1902), configurée pour obtenir des informations de détection de ligne de voie, des informations de posture de mouvement d'un premier véhicule et des informations de détection d'une pluralité d'objets ; et
une unité de traitement (1901), configurée pour : déterminer une zone de voie sur la base des informations de détection de ligne de voie ; déterminer une zone de trajectoire du premier véhicule sur la base des informations de posture de mouvement du premier véhicule ; déterminer une zone de dépassement du premier véhicule sur la base de la zone de voie, de la zone de trajectoire du premier véhicule et d'un état de déplacement du premier véhicule ; déterminer des valeurs de paramètre d'état de la pluralité d'objets sur la base de la zone de dépassement du premier véhicule et des informations de détection de la pluralité d'objets, dans lequel la valeur de paramètre d'état de chaque objet est utilisée pour indiquer un degré de chevauchement entre l'objet et la zone de dépassement du premier véhicule ; et sélectionner au moins un objet clé parmi la pluralité d'objets sur la base au moins des valeurs de paramètre d'état de la pluralité d'objets.

**15.** Support de stockage lisible par ordinateur, dans lequel le support de stockage lisible par ordinateur comprend des instructions de programme, et lorsque les instructions de programme sont exécutées sur un dispositif, cela permet au dispositif de mettre en œuvre le procédé selon l'une quelconque des revendications 1 à 13.

Lane 1

Vehicle A

First vehicle

Lane 2

FIG. 1(a)

First vehicle

FIG. 1(b)

| First vehicle | First vehicle | First vehicle | First vehicle |

Lane 1

Vehicle A

Vehicle A

Lane 2

Vehicle A    Vehicle A

FIG. 1(c)

FIG. 1(d)

FIG. 2

Step 300: A first vehicle obtains lane line detection information, motion posture information of the first vehicle, and detection information of a plurality of objects

Step 310: Determine a lane area based on the lane line detection information

Step 320: Determine a track area of the first vehicle based on the motion posture information of the first vehicle

Step 330: Determine a passing area of the first vehicle based on the lane area, the track area of the first vehicle, and a traveling status of the first vehicle

Step 340: Determine status parameter values of the plurality of objects based on the passing area of the first vehicle and the detection information of the plurality of objects

Step 350: Select at least one key object from the plurality of objects based on at least the status parameter values of the plurality of objects

FIG. 3

FIG. 4

After adjustment

FIG. 5(a)

After adjustment

FIG. 5(b)

FIG. 6

FIG. 7

FIG. 8

FIG. 9

FIG. 10(a)

FIG. 10(b)

FIG. 10(c)

FIG. 11

FIG. 12

FIG. 13

FIG. 14

Condition D: P gradually increases for more than 100 ms, and an accumulated increment exceeds 60%.

Current lane

Condition D: P gradually increases for more than 100 ms, and the accumulated increment exceeds 60%.

Condition A: P gradually decreases for more than 100 ms, and an accumulated decrement exceeds 30%.

Condition A: P gradually decreases for more than 100 ms, and the accumulated decrement exceeds 30%.

Cut in from the left

Cut out to the left

Cut out to the right

Cut in from the right

Condition B: P gradually increases for more than 100 ms, and the accumulated increment exceeds 20%.

Condition C: P gradually decreases for more than 100 ms, and the accumulated decrement exceeds 90%.

Condition C: P gradually decreases for more than 100 ms, and the accumulated decrement exceeds 90%.

Condition B: P gradually increases for more than 100 ms, and the accumulated increment exceeds 20%.

Left lane

Right lane

FIG. 15

EP 4 129 787 B1

A key object is an object A

The key object is an object B

The key object is an object C

Object A

Object B

Object C

Traveling direction

Object A

Object B

Object C

Traveling direction

Object C

Object A

Object B

Traveling direction

First vehicle

a

First vehicle

b

First vehicle

c

FIG. 16

FIG. 17

FIG. 18

1900

Apparatus

1901

Processing unit

1902

Obtaining unit

FIG. 19

2000

Apparatus

2001

Processing unit

2002

Transceiver unit

FIG. 20

2100

Apparatus

2101

Communication interface

2102

Processor

2103

Memory

FIG. 21

**EP 4 129 787 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5999874 A
- DE 102011102429